(19) Europäisches Patentamt
European Patent Office
Office européen des brevets

(11) EP 2 817 379 B1

(12) EUROPÄISCHE PATENTSCHRIFT

(45) Veröffentlichungstag und Bekanntmachung des Hinweises auf die Patenterteilung:
**13.04.2016 Patentblatt 2016/15**

(21) Anmeldenummer: **13704122.4**

(22) Anmeldetag: **14.02.2013**

(51) Int Cl.:
***C09J 133/00*** (2006.01)
***C08K 5/14*** (2006.01)
***B32B 17/10*** (2006.01)
***H01L 31/052*** (2006.01)
***C08L 33/10*** (2006.01)
***C09J 133/08*** (2006.01)
***C09J 4/06*** (2006.01)
***C08J 3/28*** (2006.01)
***C09J 7/00*** (2006.01)
***C08L 33/08*** (2006.01)
***C09J 133/10*** (2006.01)

(86) Internationale Anmeldenummer:
**PCT/EP2013/053006**

(87) Internationale Veröffentlichungsnummer:
**WO 2013/124210 (29.08.2013 Gazette 2013/35)**

(54) **KLEBER ZUR HERSTELLUNG VON VERBUNDKÖRPERN, BEVORZUGT EINES KUNSTSTOFF-GLAS-VERBUNDS ODER VERBUNDGLASES, FÜR ARCHITEKTUR UND BAU**

ADHESIVE FOR PRODUCING COMPOUND BODIES, PRIMARILY A PLASTIC-GLASS COMPOUND OR COMPOUND GLASS, FOR ARCHITECTURE AND CONSTRUCTION

COLLE POUR LA FABRICATION DE CORPS COMPOSITES, DE PRÉFÉRENCE D'UN COMPOSITE EN MATIÈRE SYNTHÉTIQUE-VERRE OU VERRE COMPOSITE, POUR L'ARCHITECTURE ET LA CONSTRUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2012 EP 12156840**

(43) Veröffentlichungstag der Anmeldung:
**31.12.2014 Patentblatt 2015/01**

(73) Patentinhaber: **Evonik Röhm GmbH
64293 Darmstadt (DE)**

(72) Erfinder:
- **HASSKERL, Thomas
61476 Kronberg (DE)**
- **KORALEWSKI, Klaus
64560 Riedstadt (DE)**
- **SCHWARZ-BARAC, Sabine
64560 Riedstadt (DE)**
- **RECKTENWALD, Roger
64625 Bensheim (DE)**
- **HÖSS, Werner
64409 Messel (DE)**
- **BAND, Florian
13407 Berlin (DE)**

(56) Entgegenhaltungen:
**EP-A1- 1 134 075**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 817 379 B1

## Beschreibung

Die Erfindung umfasst ein neue Klebstoffzusammensetzung sowie daraus hergestellte Folien zur Herstellung von Verbundkörpern, insbesondere zur Verklebung von Kunststoff mit Glasbauteilen, ein Verfahren zur Herstellung von entsprechenden Verbundkörpern sowie die damit hergestellten Verbundkörper.

Transparente Verbundscheiben aus Glas und Kunststoff sind schon seit langem bekannt. Es gibt zahlreiche Anwendungen für transparente Verbundsysteme von Glas und Kunststoff.

Glas-Polymerverbundsysteme werden zum Beispiel für Sicherheitsverglasungen von Automobilen eingesetzt, wobei dreidimensional gewölbte Verbundscheiben zum Einsatz kommen. Beispiele werden in FR2856951A1 über umspritzte Scheiben und in EP617078B1 über haftungsregulierende und haftungsreduzierende Systeme zur besseren Splitterbindung genannt. Bei dieser Anwendung wird ein möglichst geringes Gewicht bei guter Sicherheit angestrebt. In WO2007080186A1 ist der Verbund zwischen zwei vorgeformten speziell thermisch vorbehandelten Scheiben mit einer thermoplastischen Zwischenschicht beansprucht, wobei beispielsweise PVB beschrieben wird. Die Verscheibung wird spezifisch für Automobil-Verscheibungen beansprucht. Die thermoplastische Zwischenschicht (Klebeschicht) wird nicht näher beschrieben, eine schlagzähe Ausrüstung nicht erwähnt.

In WO2001051279A2 wird durch Verpressen unter Druck und Temperatur ein Verbund aus Glas/Adhesivharz/thermoplastischer Zwischenschicht/Adhesivharz/Glas insbesondere für Automobil-Windschutzscheiben beschrieben.

In FR2925483A1 wird ein Glas-Polymer-Verbund mit einer innenliegenden vernetzten adhäsiven Acrylharzschicht sowie einer Polymerschicht aus PVB beschrieben. Ähnlich beschreibt DE10118617A1 die Lamination zweier Glasschichten mit einem Acryl-Gießharz, welches nach Aufbringen auf die Glasoberfläche polymerisiert wird und auch Haftung auf elektrochromen Schichten aufweist. DE2929491A1 (Priorität 20.07.1979) beansprucht ein durchscheinendes Sicherheitsglas aus zwei äußeren Glasplatten mit einer zentralen Acrylplatte wobei ein fließfähiges, reaktionsfähiges Acrylat eingesetzt wird, das nach dem Aushärten elastisch ist. Die weiche und zähe Zwischenschicht kann teilweise die Schlagkräfte aufnehmen und auf eine größere Fläche verteilen. Es wird die zusätzliche Verwendung von Weichmacher-Acrylaten beschrieben. Die zentrale hoch schlagfeste Acrylplatte besteht aus Polymethylmethacrylat (PMMA) und weist einen Gehalt an Acrylelastomeren von ca. 20% auf. Aussagen bzgl. Änderung der Transmission infolge der Temperaturänderung sind nicht enthalten.

Weiterhin wird in WO2005058596A1 ein Glas-Polymer-Verbund sowohl für Automobil-Verscheibungen als auch für Verbunde für Architektur-Anwendungen bestehend aus dem direkten Verbund von Glas mit polymerer Zwischenschicht beschrieben. Diese basiert auf Ethylen(meth)acrylsäure-Copolymeren.

In WO2005005123A1 wird ein Glas-Folienverbund beschrieben, bei welchem die Haftung durch eine speziell durch Prägung strukturierte Folie mit verstärkter Rauhigkeit erhöht wird. Ebenso wird in AU2005200410A1 die Strukturierung einer thermoplastischen Zwischenschicht für Glas-Laminate basierend auf weichgemachtem Polyvinylacetal zur Verhinderung der Ausbildung eines Moire-Phänomens beansprucht. In WO2011080464A1 und der FR2948357A1 wird jeweils ein Verbund eines mineralischen Glases mit einem organischen Glas durch eine Zwischenschicht beschrieben, die zur Vermeidung von optischen Störungen eine gewisse Dickenvarianz aufweist. Als organisches Glas ist auch PMMA beschrieben. Bzgl. thermoplastischer Zwischenschicht (Klebeschicht) wird PVB, PU,... beschrieben.

In US20050202198A1 wird der Prozess zur Herstellung eines Verbundes aus Glas, thermoplastischer Adhäsiv-Folie, thermoplastische Polymer-Platte, einer weiteren thermoplastischen Adhäsiv-Folie und einer zweiten Glasscheibe beansprucht. Die Adhäsiv-Folie basiert auf thermoplastischem Polyurethan, welches mit PE-Schutzfolien versehen ist. Als thermoplastisches, zentrales Plattenmaterial wird Polycarbonat (PC) verwendet.

Des Weiteren spielen Verbundscheiben beim Schutz gegen Beschuss und Explosionen eine wichtige Rolle. Die Beschussfestigkeit wird durch Lamination mehrerer Schichten dicker Glasscheiben und dazwischenliegender weicher oder duktiler Polymerschichten erreicht. Je nach angestrebter Beschussfestigkeit sind mehr oder weniger dicke Anordnungen erforderlich. Beschussfeste Scheiben kommen in Automobilen, gepanzerten Fahrzeugen für militärische Zwecke oder beim Schutz sensibler Gebäude zum Einsatz. Beispiele werden in US 5506051 A über Verbundscheiben mit flexiblen Zwischenlagen und in WO9962707A1 über ein außen dickschichtbeschichtetes Verbundglas genannt.

Neben diesen Anwendungen wird die Verwendung von Verbundgläsern auch für Brandschutzverglasungen z.B. über eine Intumeszensschicht in DE202010008723U1, für Photovoltaikdünnschichtmodule in DE102009025972A1, für Sicherheitslaminate und Solarmodule mit Polyolefin-basierter Außenschicht zur Verbesserung der Abriebbeständigkeit in US20100108143A1 sowie US20100108127A1 und für spezielle Verscheibungen mit weiteren Ausrüstungen und Eigenschaften, wie z.B. einbruchhemmende Verglasungen in DE 19526912 A1 durch Verwendung von Schichtfolien und in EP2199075A1 durch Ethylenmethacrylsäure-Copolymere für die Flächenverpressung genannt.

Bekannt sind auch spezielle Fenster wie z.B. Bleiverglasungen in EP259529B1, Glas-Kunststofflaminate mit elektrisch leitfähigen Schichten und Gas-gefülltem Bereich in WO2010063729A1 und US20040022970A1, Fernsehvorsatzscheiben in US3867222A sowie Wärmemanagement, und sturm- oder hurrikanfesten Verglasungen für Gebäude mit speziellen extrem belastbaren Silikatgläsern. In WO2004089617A1, WO2004089618A1, WO2004089619A1 und

WO2004011755A1 wird unter Verwendung von Ethylenmethacrylsäure-Copolymeren die direkte Haftung auf Glas beansprucht. Hier ist ebenfalls US20060201078A1 zu erwähnen, welches einen Glasverbund zwischen Glas und einer thermoplastischen, schlagzähen Polymerschicht beansprucht, der durch einen besonderen Aufbau die Realisierung breiter Glas-Verbund-Flächen ohne weitere Rahmenverstärkung ermöglicht.

In DE10045006C1 wird ein Gießharz beschrieben, welches reaktive acrylat- oder methacrylatfunktionelle Oligomere umfasst. Aussagen bzgl. Verhalten nach Temperaturwechselbeanspruchung sind nicht enthalten.

In WO2010010156A1 wird eine Sicherheitsverglasung basierend auf Glasscheiben und thermoplastischen Zwischenschichten mit verbesserter Akustik beansprucht. Bezüglich der Thermoplaste wird nur offenbart, dass dieser gegenüber PVB im Gesamtverbund eine bessere Akustik bewirkt. Eine weitere Beschreibung der Thermoplaste erfolgt nicht.

In DE660634C wird ein Verfahren zur Herstellung eines splittersicheren Verbundglases mit guter Witterungsbeständigkeit durch Verbinden der Glasscheiben mit einer weichen Polyacrylatzwischenlage genannt. Die Polyacrylatzwischenlage kann durch Verpressen einer aus den Monomeren hergestellten Folie oder durch Polymerisation der Monomere zwischen den Glasplatten hergestellt werden. In DE2524729A1 wird ein Sicherheitsglas aus Mineralglas und Polycarbonat mit weichen Zwischenlagen beschrieben. In WO03078485A1 wird ein Verbundglas aus vergleichsweise dünnen äußeren Glasscheiben und PMMA-Zwischenlage mit haftungsvermittelnden Komponenten auf Silanbasis beschrieben.

Bei der Verklebung von Glas und PMMA treten Spannungen aufgrund der unterschiedlichen thermischen Ausdehnungskoeffizienten von Glas und PMMA auf, die bei starken Temperaturunterschieden zu Verzug, Delamination oder Zerreißen der Verbundscheiben führen können. Wenn z. B. Dünnglas mit weichen Kunststoffen verbunden wird, besteht das Problem, dass beim Anstoßen des harten Silikatglases mit einem harten Gegenstand leicht eine Beschädigung auftreten kann. Wird ein hartes Verbundmaterial wie in WO03078485A1 verwendet, bleibt die Laminatplatte beim Anstoßen trotz Dünnglas zwar unbeschadet, aber das Verbundsystem kann nicht die Spannungen beim Klimawechsel oder bei großen Temperaturunterschieden zwischen den Glasseiten abfedern.

Wie die Vielzahl der Patentanmeldungen zeigt, besteht ein großer Bedarf an Verbundglassystemen mit einem erweiterten Eigenschaftsspektrum, wobei insbesondere das Gewicht eine herausragende Rolle spielt. Es hat schon zahlreiche Versuche gegeben, leichte und langlebige Glas-Polymerverbunde mit weiteren Eigenschaften herzustellen, jedoch ist es bisher nicht gelungen, langlebige Glas-Polymerverbunde mit geringem Gewicht, wärme- und schallisolierenden Eigenschaften und sehr guten optischen Eigenschaften in einem kostengünstigen Prozess herzustellen. Es besteht somit nach wie vor Bedarf an neuen Materialien, insbesondere Klebstoffen zur Herstellung von Verbundkörpern, insbesondere solchen aus Glas und Kunststoff.

Aufgabe der vorliegenden Erfindung war es daher eine Klebstoffzusammensetzung (Klebstoff) bzw. daraus hergestellte Folien (Klebefolien), zur Herstellung von Verbundkörpern, bevorzugt zur Verklebung von Kunststoff- und Glaskörpern, welche die Nachteile des Standes der Technik nicht oder nur in verringertem Maße aufweisen, zur Verfügung zu stellen.

Eine spezielle Aufgabe kann darin gesehen werden einen Klebstoff bzw. Klebefolien zur Verfügung zu stellen, der/die elastisch genug ist um die Unterschiede bei der thermischen Ausdehnung der miteinander zu verklebenden Körper auszugleichen.

Eine weitere spezielle Aufgabe bestand darin einen Klebstoff bzw. Klebefolien bereitzustellen, der/die die Aufrechterhaltung der klaren Transparenz über einen ausreichend großen Temperaturbereich ermöglicht. Bevorzugt soll die als Kleber zwischen Glas und PMMA verwendete Schicht im Temperaturbereichen von - 40 °C bis 80 °C transparent bleiben, d.h. einen Haze < 3,5% aufweisen.

Ebenfalls eine spezielle Aufgabe der vorliegenden Erfindung war es ein Verglasungsmaterial für Gebäude und Fahrzeuge bereitzustellen, dass möglichst viele der nachfolgenden Anforderungen erfüllt: geringes Gewicht, glasähnliche Oberflächeneigenschaften, wie Chemikalienbeständigkeit, Stoßfestigkeit und Kratzfestigkeit, optional besonders gute Schall- und Wärmeisolierung, hohe Transparenz, Vergilbungsbeständigkeit, Beständigkeit gegen UV-Licht und Klimawechselbeanspruchung, Splitterbindung und Überkopfschutz, gute Glas-Polymerhaftung und Langlebigkeit über viele Jahre.

Weitere nicht explizit genannte Aufgaben ergeben sich aus dem Gesamtzusammenhang der vorliegenden Beschreibung, Beispiele, Ansprüche und Abbildungen.

Die Erfinder haben nun überraschend herausgefunden, dass eine Klebstoffzusammensetzung gemäß Anspruch 1 die gestellten Aufgaben zu lösen vermag.

Gegenstand der vorliegenden Anmeldung sind daher Klebstoffzusammensetzungen nach Anspruch 1. Dabei kann es sich um eine bereits polymerisierte Zusammensetzung handeln, die z. B. als Schmelzklebers verwendet werden kann. Es kann sich aber auch um polymerisierbare Zusammensetzungen handeln, welche nur Monomere oder ein Gemisch aus Monomeren und Polymeren enthalten können. Aus einer erfindungsgemäßen polymerisierbaren Zusammensetzung kann direkt eine Klebeschicht zwischen zwei zu verbindenden Körpern hergestellt werden. Alternativ kann aus einer erfindungsgemäßen Klebstoffzusammensetzung, bevorzugt in Form einer polymerisierbaren Zusammensetzung, zunächst eine Folie hergestellt werden, welche dann zwischen zwei zu verklebenden Körper gelegt wird und diese dann durch Lamination verbunden werden. Besagte Folie sowie die beschriebenen Verfahren zur Herstellung der Verbundkörper sind ebenfalls Gegenstand der vorliegenden Erfindung. Schließlich sind Gegenstand der vorliegenden Erfindung Verbundkörper umfassend einen erfindungsgemäßen Kleber bzw. erfindungsgemäße Klebefolien.

Die erfindungsgemäße Klebstoffzusammensetzung bzw. die Klebefolie kann bevorzugt ohne Styrol hergestellt werden. Im Vergleich zu PMMA oder Butylmethacrylat basierten Klebern mit Styrol weist die dadurch erhaltene Klebeschicht eine höhere Elastizität auf.

Durch die gute Verträglichkeit der erfindungsgemäß verwendeten Monomere und Polymere kann die klare Transparenz über einen weiten Temperaturbereich aufrecht erhalten werden.

Die mit der erfindungsgemäßen Klebstoffzusammensetzung hergestellten Verbundkörper zeigen sehr gute mechanische Eigenschaften bei Stoß- und Schereinwirkungen.

Beim Klimawechseltest -40°C bis 80°C kommt es weder zur Delamination noch werden die optischen Eigenschaften beeinträchtigt.

Erfindungsgemäß umfasst der Ausdruck (Meth)acrylat Methacrylate und Acrylate sowie Mischungen aus beiden.

Die erfindungsgemäße Klebstoffzusammensetzung kann in Form von Copolymeren oder von Blends verschiedener Polymere aus den in Anspruch 1 genannten Komponenten a) bis e) vorliegen. In diesem Fall handelt es sich nicht um ein Reaktivsystem, sondern um ein System bei dem der Kleber zunächst geschmolzen werden muss bevor er zwei Komponenten miteinander verbinden kann. Umgangssprachlich spricht man hier von einem "Schmeizkieber".

Die erfindungsgemäße Klebstoffzusammensetzung kann aber auch in Form eines Reaktivsystems, d.h. einer polymerisierbaren Zusammensetzung vorliegen. Eine "polymerisierbare Zusammensetzung" bezeichnet im Sinne der vorliegenden Erfindung eine Zusammensetzung, die eine oder mehrere Monomere enthält, welche durch im Stand der Technik bekannte Polymerisationsverfahren, wie beispielsweise radikalische, anionische und kationische Polymerisation, in hochmolekulare Verbindungen, sogenannte Polymere, überführt werden können. Diese weisen in Sinne der vorliegenden Erfindung ein Zahlenmittel des Polymerisationsgrades $P_n$ von mindestens 10 auf. Für weitere Einzelheiten wird auf die Offenbarung von H. G. Elias, Makromoleküle, Band 1 und 2, Basel, Heidelberg, New York Hüthig und Wepf. 1990 und Ullmann's Encyclopedia of Industrial Chemistry, 5. Aufl., Stichwort "Polymerization Processes" verwiesen. Dieses Reaktivsystem kann entweder direkt zwischen zwei zu verklebende Körper gebracht und polymerisiert werden, wobei die Klebeschicht entsteht. Es ist aber auch möglich, aus dem Reaktivsystem zunächst eine Klebefolie herzustellen und diese dann zwischen zwei zu verklebende Körper anzuordnen und danach durch Lamination zu verkleben.

Die Begriffe "Folie hergestellt aus der erfindungsgemäßen polymerisierbaren Zusammensetzungen" und "Klebefolie" synonym verwendet.

Die erfindungsgemäße Klebstoffzusammensetzung umfasst:

a) 10 bis 60 Gew. % Polyisobutylmethacrylat oder Isobutylmethacrylat oder eines Gemisches davon

b) 0 bis 80 Gew. % Butylacrylat

c) 0 bis 60 Gew. % Polybutylacrylat

d) 0 bis 5 Gew. % mindestens eines (Meth)acrylates der Formel (I)

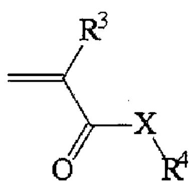

(I)

wobei X = O oder N, $R^3$ ein Wasserstoffatom oder eine Methylgruppe ist und $R^4$ ein Wasserstoffatom ist oder einen aliphatischen oder cycloaliphatischen Rest mit 1 bis 20 Kohlenstoffatomen bezeichnet, der mindestens eine Hydroxyl-, Thiol-, primäre Amino-, sekundäre Amino-, und/oder eine Epoxygruppe aufweist,

e) 0 bis 5 Gew. % mindestens einer Silizium-Verbindung erhältlich durch Umsetzung von 0 bis 5 Gewichtsteilen mindestens einer Silizium-Verbindung der Formel (II):

$$Si_mR^1_nR^2_oO_rX_s \qquad (II)$$

wobei $R^1$ jeweils unabhängig voneinander einen Alkenyl- oder Cycloalkenylrest mit 2 bis 12 Kohlenstoffatomen bezeichnet, der eine oder mehrere Estergruppen aufweisen kann,

$R^2$ jeweils unabhängig voneinander einen Alkyl- oder Cycloalkylrest mit 1 bis 12 Kohlenstoffatomen kennzeichnet,

X jeweils unabhängig voneinander ein Halogenatom oder eine Alkoxygruppe mit 1 bis 6 Kohlenstoffatomen darstellt,

m eine ganze Zahl größer gleich 1 ist,

n eine ganze Zahl zwischen 1 und 2*m+1 ist,

o eine ganze Zahl zwischen 0 und 2*m ist,

r eine ganze Zahl zwischen 0 und m-1 ist,

s eine ganze Zahl zwischen 1 und 2*m+1 ist, und

wobei m, n, o und s der Beziehung (1) genügen:

$$n + o + s = 2*m + 2 \qquad (1)$$

mit 0,01 bis 2 Gewichtsteilen Wasser und 0 bis 4 Gewichtsteilen mindestens einer Säure,

Die Summe der Komponenten a) bis e) beträgt 100 Gew. % und die Menge an b) und c) beträgt in Summe mindestens 30 Gew. %, bevorzugt 30 bis 90 Gew. %, bezogen auf die Summe der Komponenten a) bis e). Mit anderen Worten die Erfindung umfasst nur solche Kombinationen aus den o. g. Gewichtsangaben die für die Komponenten a) bis e) - für sich gesehen - zusammen 100 Gew. % ergeben.

Die erfindungsgemäße Klebstoffzusammensetzung kann neben den Komponenten a) bis e) noch in Summe 0,1 bis 6 Gew. %, bevorzugt 0,1 bis 5 Gew. % und besonders bevorzugt 0,2 bis 4 Gew. % jeweils bezogen auf das Gesamtgewicht der Klebstoffzusammensetzung, weitere - von den Komponenten a) bis e) verschiedene - üblicherweise zur Herstellung von Methacrylat-basierten Klebstoffen einsetzbare Additive wie z.B. Polymerisationsinitiatoren aufweisen. Die Summe der Komponenten a) bis e) ist somit zwar in sich 100 Gew. %, bezogen auf die Klebstoffzusammensetzung als Ganzes entsprechen diese 100 Gew. % jedoch nur dann 100 Gew. % der Klebstoffzusammensetzung, wenn kein weiteres Additiv enthalten ist. Sind weitere Additive enthalten, so ergibt sich der Anteil der Summe der Komponenten a) bis e) aus der Gesamtmasse der Klebstoffzusammensetzung (entspricht 100 gesamt Gew. %) minus dem Anteil der Additive in Gew. % bezogen auf die Gesamtmasse der Klebstoffzusammensetzung.

Als Komponente a) enthält die erfindungsgemäße Klebstoffzusammensetzung 10 bis 60 Gew. %, bevorzugt 20 bis 50 Gew. %, besonders bevorzugt 20 bis 40 Gew. % jeweils bezogen auf die Summe der Komponenten a) bis e), an Polyisobutylmethacrylat oder Isobutylmethacrylat oder eines Gemisches daraus. Liegt ein Gemisch aus Polyisobutylmethacrylat und Isobutylmethacrylat vor, so beträgt das Mischungsverhältnis Polyisobutylmethacrylat zu Isobutylmethacrylat bevorzugt 95 bis 50 Gewichtsteile zu 5 bis 50 Gewichtsteile und besonders 90 bis 70 Gewichtsteile zu 10 bis 30 Gewichtsteile. Ein solches Mischungsverhältnis bringt folgende Vorteile: Die Viskosität kann insbesondere wenn höhermolekulares Polyisobutylmethacrylat eingesetzt wird, erniedrigt werden, wodurch die Befüllung von Polymerisationskammern erleichtert wird. Durch die Verwendung des Isobutylmethacrylats als verdünnende Komponente wird die Wärmeformbeständigkeit und die Scherfestigkeit gegenüber der Verdünnung mit Butylacrylat beibehalten.

In einer besonders bevorzugten Ausführungsform besteht Komponente a) zu mindestens 80 Gew. %, bevorzugt 90 Gew. % aus Polyisobutylmethacrylat.

Die Erfinder haben herausgefunden, dass es für die Klebkraft der erfindungsgemäßen Klebstoffzusammensetzungen von Vorteil ist, wenn diese mindestens 10 Gew. % Polymere enthält. Dabei handelt es sich besonders bevorzugt um Polymere der Komponente a) und/oder der Komponente c) und/oder eines Copolymeren der Komponenten a) und d). Ganz besonders vorteilhaft erwiesen sich erfindungsgemäße Klebstoffzusammensetzungen in Form einer polymerisierbaren Zusammensetzung, welche 10 bis 70 Gew. %, bevorzugt 10 bis 60 Gew. %, besonders bevorzugt 20 bis 50 Gew. %, und ganz besonders bevorzugt 20 bis 40 Gew. %, jeweils bezogen auf die Summe der Komponenten a) bis d) an polymeren Bestandteilen aufweisen. Entsprechend weisen diese besonders bevorzugten Klebstoffzusammensetzungen 90 bis 30 Gew. %, bevorzugt 90 bis 40 Gew. %, besonders bevorzugt 80 bis 50 Gew. %, und ganz besonders bevorzugt 80 bis 60 Gew. %, jeweils bezogen auf die Summe der Komponenten a) bis d) an monomeren Bestandteilen auf.

Bei zunehmendem Anteil an Komponente a) in der Klebeschicht hat sich gezeigt, dass die Scherfestigkeit zunimmt. Das heißt je härter die Verbundschicht desto besser ist die mechanische Festigkeit. Ein zu hoher Anteil der Komponente a) kann jedoch zu Verformungen der Verbundkörper führen.

Die erfindungsgemäße Klebstoffzusammensetzung enthält daher 0 bis 80 Gew. % Butylacrylat und/oder 0 bis 50 Gew. % Polybutylacrylat als Komponente b) bzw. c), wobei die Menge an b) und c) in Summe 30 bis 90 Gew. %, besonders bevorzugt 40 bis 80 Gew. %, ganz besonders bevorzugt 50 bis 80 Gew. % beträgt. Die Angaben in Gew. % beziehen sich jeweils auf die Summe der Komponenten a) bis e), in der erfindungsgemäßen Klebstoffzusammensetzung.

In einer bevorzugten Ausführungsform ist von den Komponenten b) und c) ausschließlich b) vorhanden. In einer anderen besonders bevorzugten Ausführungsform der vorliegenden Erfindung ist das Butylacrylat teilweise durch Polybutylacrylat ersetzt. Der Anteil an Polybutylacrylat, jeweils bezogen auf die Summe der Komponenten a) bis e), in der erfindungsgemäßen Klebstoffzusammensetzung, beträgt bevorzugt 0 bis 40 Gew. %, besonders bevorzugt 0 bis 35 Gew. %, ganz besonders bevorzugt 1 bis 30 Gew. % und speziell bevorzugt 5 bis 20 Gew. %. Die Menge an Butylacrylat wird entsprechend so ergänzt, dass sie die oben genannten Summenangaben für b) + c) ergeben.

Die Erfinder haben herausgefunden, dass Butylacrylat und Polybutylacrylat gut miteinander und insbesondere auch gut mit Isobutyl- bzw. Polyisobutylmethacrylat verträglich sind. Dies sorgt dafür, dass nach der Polymerisation eine glasklare Verbundschicht (Haze < 3,5%) erhalten wird. Ferner sind die Erfinder der Ansicht, dass die Auswahl der Komponenten a) bis c) auch dafür verantwortlich ist, dass diese sehr guten optischen Eigenschaften auch nach einem anspruchsvollen Klimawechseltest erhalten bleiben.

Weiterhin in der Klebstoffzusammensetzung bevorzugt enthalten ist die Komponente d). Dabei handelt es sich um mindestens ein (Meth)acrylat der Formel (I)

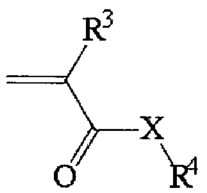

(I)

X = O oder N, $R^3$ ist ein Wasserstoffatom oder eine Methylgruppe. $R^4$ bezeichnet Wasserstoff oder einen aliphatischen oder cycloaliphatischen oder heterocyclischen Rest mit 1 bis 20 Kohlenstoffatomen, vorzugsweise 1 bis 12 Kohlenstoffatomen, insbesondere 2 bis 6 Kohlenstoffatomen, der mindestens eine Hydroxyl-, Thiol-, primäre Amino-, sekundäre Amino-, und/oder eine Epoxygruppe aufweist.

Zu den erfindungsgemäß einsetzbaren (Meth)acrylaten d) gehören u. a.

Hydroxyalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat, 2,5-Dimethyl-1,6-hexandiol(meth)acrylat, 1,10-Decandiol(meth)acrylat und 1,2-Propandiol(meth)acrylat;

Polyoxyethylen- und Polyoxypropylen-Derivate der (Meth)acrylsäure, wie Triethylenglykol(meth)acrylat, Tetraethylenglykol(meth)acrylat und Tetrapropylenglykol(meth)acrylat;

Aminoalkyl(meth)acrylate, wie 2-[N,N-Dimethylamino]-ethyl(meth)acrylat, 3-[N,N-Dimethylamino]-propyl(meth)acrylat, 2-[N,N-Dethylamino]-ethyl(meth)acrylat, 3-[N,N-Diethylamino]-propyl(meth)acrylat und 2-(4-Morpholinyl)ethyl(meth)acrylat;

Oxiranyl(meth)acrylate, wie 2,3-Epoxybutyl(meth)acrylat, 3,4-Epoxybutyl(meth)acrylat und Glycidyl(meth)acrylat;

Mercaptoalkyl(meth)acrylate, wie 2-Mercaptoethyl(meth)acrylat und 3-Mercaptopropyl(meth)acrylat,

Acrylsäure, Methacrylsäure, Glycidylacrylat, Acrylamid, Methacrylamid, N-Methylmethacrylamid, N,N-Dimethylacrylamid, N,N-Diethylacrylamid, N,N-Dimethylmethacrylamid, N,N-Diethylmethacrylamid, N-Isopropylacrylamid, N-Isopropylmethacrylamid, N,N-Dimethylaminopropylacrylamid, N-Hydroxyethylacrylamid, N-Methylolmethacrylamid, Acryloylmorpholin, N-Vinylpyrrolidon, N-Methacryloylharnstoff, N-Acetylmethacrylamid, N-Ethoxycarbonylaminomethylmethacrylamid, 2-(4-Morpholinylethylmethacrylat, N-Methylolacrylamid, N-Methoxymethylacrylamid, N-Methacryloyl-2-pyrrolidon, N-(Methacrylamidomethyl)pyrrolidon, N-(Methacrylamidomethyl)caprolactam, N-Isobutoxymethylmethacrylamid, 2-(1-Imidazolyl)ethylmethacrylat, N-3-Dimethylaminopropylmethacrylamid, 3-Dimethylamino-2,2-dimethylpropylmethacrylat, 2-N-Morpholinoethylacrylat, N-(3-Morpholinopropyl)methacrylamid.

Im Rahmen der vorliegenden Erfindung bevorzugte (Meth)acrylate d) umfassen (Meth)acrylsäure, Hydroxylalkyl(meth)acrylate, Aminoalkyl(meth)acrylate, Oxiranyl(meth)acrylate und Mercaptoalkyl(meth)acrylate, insbesondere Glycidyl(meth)acrylat. Diese werden vorzugsweise mit einem Gewichtsanteil >50 Gew.-%, zweckmäßigerweise > 75

Gew.-%, insbesondere > 95 Gew.-%, bezogen auf alle (Meth)acrylate d) eingesetzt.

Die Gesamtmenge an (Meth)acrylaten d) darf erfindungsgemäß 5 Gew. % nicht übersteigen, da sonst ungünstige Einflüsse im durch Polymerisation der Zusammensetzung erhältlichen Polymer auftreten können, wie beispielsweise eine verstärkte Wasserquellbarkeit im Falle der Verwendung von (Meth)acrylsäure, Hydroxyalkyl(meth)acrylaten oder eine deutliche Vergilbung im Falle der Verwendung von substituierten aminogruppenhaltigen (Meth)acrylaten. Die Menge der Komponente d) ist daher bevorzugt in einem Anteil von 0 bis 3 Gew. %, besonders bevorzugt von 0 bis 2,5 Gew. %, ganz besonders bevorzugt 0 bis 2 Gew. % und speziell bevorzugt 0,5 bis 1,5 Gew. % jeweils bezogen auf die Summe der Komponenten a) bis e), in der erfindungsgemäßen Klebstoffzusammensetzung enthalten.

Üblicher Weise wird die Komponente d) als separate Komponente zugegeben. In einer bevorzugten Ausführungsform ist es aber auch möglich aus den Komponenten a) und d) und/oder b) und d) zunächst ein Copolymer herzustellen und dieses zur Herstellung der Klebstoffzusammensetzung zu verwenden.

Ebenfalls bevorzugt in der erfindungsgemäßen Klebstoffzusammensetzung enthalten ist die Komponente e). Dabei handelt es sich um eine Silizium-Verbindung die erhalten wird durch Umsetzung von 0 bis 5 Gewichtsteilen einer Silizium-Verbindung der Formel (II):

$$Si_mR^1_nR_oO_rX_s \qquad (II)$$

wobei $R^1$ jeweils unabhängig voneinander einen Alkenyl- oder Cycloalkenylrest mit 2 bis 12 Kohlenstoffatomen bezeichnet, der eine oder mehrere Estergruppen aufweisen kann,
$R^2$ jeweils unabhängig voneinander einen Alkyl- oder Cycloalkylrest mit 1 bis 12 Kohlenstoffatomen kennzeichnet,
X jeweils unabhängig voneinander ein Halogenatom oder eine Alkoxygruppe mit 1 bis 6 Kohlenstoffatomen darstellt,
m eine ganze Zahl größer gleich 1 ist,
n eine ganze Zahl zwischen 1 und 2*m+1 ist,
o eine ganze Zahl zwischen 0 und 2*m ist,
r eine ganze Zahl zwischen 0 und m-1 ist,
s eine ganze Zahl zwischen 1 und 2*m+1 ist, und
wobei m, n, o und s der Beziehung (1) genügen:

$$n + o + s = 2*m + 2 \qquad (2)$$

mit 0,01 bis 2 Gewichtsteilen Wasser und 0 bis 5, zweckmäßigerweise 0,01 bis 4,0 Gewichtsteilen, insbesondere 0,01 bis 2,0 Gewichtsteilen, mindestens einer Säure.

In Formel (II) bezeichnen die Reste $R^1$ jeweils unabhängig voneinander einen Alkenyl- oder Cycloalkenylrest mit 2 bis 12 Kohlenstoffatomen, die eine oder mehrere Estergruppen aufweisen können. Zu diesen Resten gehören u. a. Vinyl, Propen-(1)-yl, Propen-(2)-yl, Buten-(3)-yl, Penten-(4)-yl, Hexen-(5)-yl, Hepten-(6)-yl, Octen-(7)-yl, Nonen-(8)-yl, Decen-(9)-yl, Undecen-(10)-yl, Dodecen-(11)-yl, 2-Vinylcyclopentyl, 2-Vinylcyclohexyl, γ-Methacryloxyethyl, γ-Acryloxyethyl, γ-Methacryloxypropyl und γ-Acryloxypropyl sowie die bekannten Strukturisomere dieser Reste. Bevorzugte Reste im Sinne der vorliegenden Erfindung umfassen Vinyl, γ-Methacryloxyethyl, γ-Acryloxyethyl, γ-Methacryloxypropyl und γ-Acryloxypropyl, zweckmäßigerweise γ-Methacryloxyethyl, γ-Acryloxyethyl, γ-Methacryloxypropyl und γ-Acryloxypropyl, insbesondere γ-Methacryloxypropyl und γ-Acryloxypropyl. Dabei wird der γ-Methacryloxypropyl-Rest ganz besonders bevorzugt.

Die Reste $R^2$ stellen jeweils unabhängig voneinander einen Alkyl- oder Cycloalkylrest mit 1 bis 12 Kohlenstoffatomen, vorzugsweise 1 bis 6 Kohlenstoffatomen, insbesondere 1 bis 4 Kohlenstoffatomen, dar. Zu diesen Resten gehören u. a. Methyl, Ethyl, n-Propyl-, iso-Propyl, n-Butyl, iso-Butyl, tert.-Butyl, n-Pentyl, n-Hexyl, n-Heptyl, n-Octyl, n-Nonyl, n-Decyl, n-Undecyl, n-Dodecyl, Cyclopentyl und Cyclohexyl sowie die bekannten Strukturisomere dieser Reste.

Die Reste X bedeuten jeweils unabhängig voneinander ein Halogenatom, wie Fluor, Chlor, Brom oder Iod, oder eine Alkoxygruppe mit 1 bis 6 Kohlenstoffatomen, wie beispielsweise eine Methoxy-, Ethoxy-, n-Propoxy-, iso-Propoxy-, n-Butoxy, sec-Butoxy-, tert.-Butoxy-, n-Pentoxy- oder n-Hexoxygruppe. Gemäß einer bevorzugten Ausführungsform der vorliegenden Erfindung kennzeichnet X jeweils unabhängig voneinander ein Chlor- oder ein Bromatom. Gemäß einer weiteren bevorzugten Ausführungsform der vorliegenden Erfindung stellt X jeweils unabhängig voneinander eine Alkoxygruppe mit 1 bis 6 Kohlenstoffatomen, vorzugsweise 1 bis 4 Kohlenstoffatomenen, insbesondere 1 bis 2 Kohlenstoffatomen, dar.

Der Index m kennzeichnet eine ganze Zahl größer gleich 1, zweckmäßigerweise im Bereich von 1 bis 10, vorzugsweise im Bereich von 1 bis 6, insbesondere im Bereich von 1 bis 4, d. h. 1, 2, 3 oder 4. Ganz besonders vorteilhafte Ergebnisse werden für m = 1 erzielt.

Der Index n ist eine ganze Zahl zwischen 1 und 2*m+1, zweckmäßigerweise 1 oder 2, insbesondere 1.

Der Index o ist eine ganze Zahl zwischen 0 und 2*m, zweckmäßigerweise zwischen 0 und 20, vorzugsweise zwischen 0 und 2, insbesondere 0.

Der Index r ist eine ganze Zahl zwischen 0 und m-1, zweckmäßigerweise zwischen 0 und 9, vorzugsweise zwischen 0 und 3, insbesondere 0.

Der Index s ist eine ganze Zahl zwischen 1 und 2*m+1, zweckmäßigerweise zwischen 1 und 21, vorzugsweise zwischen 1 und 13, insbesondere zwischen 1 und 9. Ganz besonders vorteilhafte Ergebnisse werden für s = 3 erzielt.

Dabei müssen die Indizes m, n, o und s der Beziehung (1) genügen:

$$n + o + s = 2*m + 2 \qquad (1)$$

Im Rahmen einer bevorzugten Ausführungsform der vorliegenden Erfindung ist die erfindungsgemäße Zusammensetzung erhältlich, indem man mindestens eine Silizium-Verbindung der Formel (IIa)

$SiR^1_nX_s$ (IIa)

als Silizium-Verbindung e) einsetzt. Dabei ist n eine ganze Zahl zwischen 1 und 3 und s = 4 - n. Silizium-Verbindungen der Formel (IIa) umfassen somit $SiR^1X_3$, $SiR^1_2X_2$ und $SiR^1_3X$.

Im Rahmen einer weiteren bevorzugten Ausführungsform der vorliegenden Erfindung ist die erfindungsgemäße Zusammensetzung erhältlich, indem man eine Mischung enthaltend mindestens eine Silizium-Verbindung der Formel (IIb)

$SiR^1_nX_s$ (IIb)

und mindestens eine Silizium-Verbindung der Formel (IIc)

$SiR^2_oX_s$ (IIc)

als Silizium-Verbindung e) einsetzt. Dabei ist in Formel (IIb) n eine ganze Zahl zwischen 1 und 3 und s = 4 - n. In Formel (IIc) ist o eine ganze Zahl zwischen 1 und 3 und s = 4 - o. Verbindungen der Formel (IIc) umfassen somit $SiR^2X_3$, $SiR^2_2X_2$ und $SiR^2_3X$, insbesondere Alkyltrialkoxysilane, Dialkyldialkoxysilane, Trialkylalkoxysilane, Alkylsilyltrihalogenide, Dialkylsilyldihalogenide und Trialkylsilylhalogenide. Zu den erfindungsgemäß besonders bevorzugten Verbindungen der Formel (IIc) gehören Trichloromethylsilan, Dichlorodimethylsilan, Chlorotrimethylsilan, Tribromomethylsilan, Dibromodimethylsilan, Bromotrimethylsilan, Trichloroethylsilan, Dichlorodiethylsilan, Chlorotriethylsilan, Tribromoethylsilan, Dibromodiethylsilan, Bromotriethylsilan, Trimethoxymethylsilan, Dimethoxydimethylsilan, Methoxytrimethylsilan, Triethoxymethylsilan, Diethoxydimethylsilan, Ethoxytrimethylsilan, Trimethoxyethylsilan, Dimethoxydiethylsilan, Methoxytriethylsilan, Triethoxymethylsilan, Diethoxydimethylsilan und Ethoxytrimethylsilan.

Erfindungsgemäß besonders günstige Ergebnisse werden unter Verwendung von einer oder mehrerer Silizium-Verbindungen der Formel (IId)

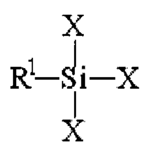

(IId)

als Silizium-Verbindung e) erhalten. Dabei hat sich insbesondere der Einsatz von Vinyltrimethoxysilan, γ-Methacryloxyethyl-trimethoxysilan, γ-Acryloxyethyl-trimethoxysilan, γ-Methacryloxypropyl-trimethoxysilan, γ-Acryloxypropyl-trimethoxysilan, Vinyltriethoxysilan, γ-Methacryloxyethyl-triethoxysilan, γ-Acryloxyethyl-triethoxysilan, γ-Methacryloxypropyl-triethoxysilan, γ-Acryloxypropyl-triethoxysilan, Vinyltrichlorosilan, γ-Methacryloxyethyl-trichlorosilan, γ-Acryloxyethyl-trichlorosilan, γ-Methacryloxypropyl-trichlorosilan, γ-Acryloxypropyl-trichlorosilan, Vinyltribromosilan, γ-Methacryloxyethyl-tribromosilan, γ-Acryloxyethyl-tribromosilan, γ-Methacryloxypropyl-tribromosilan und/oder γ-Acryloxypropyl-tribromosilan besonders bewährt.

Ganz besonders geeignete Silizium-Verbindungen der Formel (IId) umfassen die Verbindungen γ-Methacryloxypropyl-triethoxysilan, γ-Acryloxypropyl-triethoxysilan, γ-Methacryloxypropyl-trimethoxysilan, γ-Acryloxypropyl-trimethoxysilan und/oder Vinyltriethoxysilan, insbesondere γ-Methacryloxypropyl-triethoxysilan.

Die Silizium-Verbindung e) kann einzeln oder auch als Mischung zweier oder mehrerer Silizium-Verbindungen eingesetzt werden.

Säuren im Sinne der Erfindung umfassen alle bekannten anorganischen und organischen Brønsted-Säuren, vorzugsweise organische Brønsted-Säuren. Weiterhin ist auch der Einsatz von Polysäuren möglich, insbesondere von Isopolysäuren und Heteropolysäuren sowie von Mischungen verschiedener Säuren. Erfindungsgemäß einsetzbare Säuren umfassen u. a. HF, HCl, HBr, HI, $H_2SO_4$, $H_2SO_3$, $H_3PO_4$, Ameisensäure, Essigsäure, Propionsäure, Buttersäure, Pentansäure, Hexansäure, Zitronensäure, Methacrylsäure und Acrylsäure. Dabei wird die Verwendung von ethylenisch ungesättigten, organischen Säuren, insbesondere von Methacrylsäure und Acrylsäure, erfindungsgemäß besonders bevorzugt, weil diese im Zuge der Polymerisation der Zusammensetzung ebenfalls copolymerisiert werden. Die erfindungsgemäßen Säuren sind vorzugsweise in Wasser löslich, zweckmäßigerweise weisen sie eine Wasserlöslichkeit > 10 g/l bei 20°C auf. Die Säuremenge wird erfindungsgemäß vorzugsweise derart gewählt, dass der pH der Lösung Siliziumverbindung, Wasser und/oder Säure vorzugsweise im Bereich 1 bis < 7, insbesondere im Bereich 4 bis 6, bei 20°C liegt.

Obwohl das Reaktionsprodukt der Umsetzung derzeit nicht genau spezifiziert werden kann, wird derzeitig davon ausgegangen, dass die Silizium-Verbindungen der Formel (II) durch das Wasser zumindest teilweise hydrolysiert werden. Diese Hydrolyse führt vermutlich zu höher kondensierten Produkten, die gegebenenfalls verzweigende und verbrückende Gruppen der Formel (IIe)

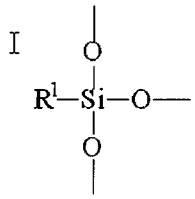

(IIe)

aufweisen.

Die Wassermenge beträgt vorzugsweise 0,1 bis 3,0 Gewichtsteile, zweckmäßigerweise 2,0 bis 3,0 Gewichtsteile, insbesondere 2,8 bis 3,0 Gewichtsteile.

Die Durchführung der Umsetzung kann auf konventionelle Weise, vorzugsweise unter Rühren, erfolgen. Dabei kann man die Reaktionstemperatur über einen weiten Bereich variiert werden, aber häufig liegt die Temperatur im Bereich von 0,0 °C bis 100,0 °C, vorzugsweise im Bereich von 10,0 °C bis 60,0 °C, insbesondere im Bereich von 20°C bis 30°C. Ähnliches gilt für den Druck bei der die Umsetzung vollzogen wird. So kann die Reaktion sowohl bei Unterdruck als auch bei Überdruck stattfinden. Vorzugsweise wird sie aber bei Normaldruck durchgeführt. Die Reaktion kann unter Luft als auch unter Schutzgasatmosphäre, wie beispielsweise unter Stickstoff- oder Argonatmosphäre, stattfinden, wobei vorzugsweise ein geringer Sauerstoffanteil vorhanden ist.

Der Endpunkt der Umsetzung lässt sich häufig daran erkennen, dass die ursprünglich vorhandene zweite Phase (Wasser) verschwunden ist und eine homogene Phase entsteht. Dabei ist die Hydrolysezeit im Allgemeinen temperaturabhängig. Bei höherer Temperatur geht die Hydrolyse schneller als bei niedriger Temperatur vonstatten. Bei einer Temperatur von 22°C wird eine homogene Phase im Allgemeinen bereits nach 30 min gebildet. Eine höhere Temperatur, z.B. 30°C, bewirkt in der Regel, dass sich schon nach 15 min eine homogene Phase bildet. Umgekehrt dauert die Hydrolyse bei tieferen Temperaturen entsprechend länger. Es ist vorteilhaft, wenn die hydrolysierte Mischung nach der Hydrolyse und Ausbildung einer einzigen Phase noch eine Zeit lang steht oder gerührt wird, um die Vollständigkeit der Hydrolyse sicher zu stellen. Um Zeit zu sparen, kann man die hydrolysierte Mischung aber auch bereits nach Ausbildung einer einheitlichen Phase mit dem Rest der Komponenten vermischen und polymerisieren. Bei sehr langen Standzeiten nach der Hydrolyse von einigen Stunden bis zu mehreren Tagen, je nach Reaktionstemperatur, setzt unter Umständen eine Kondensation der Silanole ein.

Im Rahmen der vorliegenden Erfindung wird die Umsetzung zweckmäßigerweise solange durchführt, bis man eine homogene Lösung erhält. Reaktionszeiten im Bereich von 1 Minute bis 48 Stunden, zweckmäßigerweise im Bereich von 15 Minuten bis 48 Stunden, insbesondere im Bereich von 30 Minuten bis 4 Stunden, haben sich in diesem Zusammenhang ganz besonders bewährt.

Die erfindungsgemäßen Klebstoffzusammensetzungen können ohne Zusatz der Komponenten d) und/oder e) hergestellt werden. Es hat sich jedoch gezeigt, dass der Zusatz der Komponente d) und/oder e) die Scherfestigkeit der Verbundscheiben deutlich verbessert. Der Anteil der Komponente e) beträgt somit bevorzugt 0 bis 3 Gew. %, besonders bevorzugt von 0 bis 2,5 Gew. %, ganz besonders bevorzugt 0 bis 2 Gew. % und insbesondere bevorzugt 0,1 bis 1,5 Gew. %, jeweils bezogen auf die Summe der Komponenten a) bis e), in der erfindungsgemäßen Klebstoffzusammensetzung.

Im Rahmen der vorliegenden Erfindung führt insbesondere die Kombination eines epoxyfunktionellen

(Meth)acrylat und eines vinyl- oder methacryloylgruppenfunktionellen Trialkoxysilans und im speziellen die Kombination von Glycidylmethacrylat, Acrylsäure, Methacrylsäure, Glycidylacrylat, Acrylamid, Methacrylamid, N-Methylmethacrylamid, N,N-Dimethylacrylamid, N,N-Diethylacrylamid, N,N-Dimethylmethacrylamid, N,N-Diethylmethacrylamid, N-Isopropylacrylamid, N-Isopropylmethacrylamid, N,N-Dimethylaminopropylacrylamid, N-Hydroxyethylacrylamid, N-Methylolmethacrylamid, Acryloylmorpholin, N-Vinylpyrrolidon, Hydroxyethylacrylat, Hydroxyethylmethacrylat, Hydroxypropylacrylat, Hydroxypropylmethacrylat, speziell bevorzugt Glycidylmethacrylat, Acrylsäure, Methacrylsäure, Glycidylacrylat, (als (Meth)acrylatekomponente d)) mit γ-Methacryloxypropyl-trimethoxysilan, Methacryloyloxypropyltriethoxysilan, Acryloyloxypropyltriethoxysilan, Acryloyloxypropyltrimethoxysilan, Acryloyltripropoxysilan, Methacryloyltripropoxysilan, Vinyltrimethoxysilan, Vinyltriethoxysilan, Acryloyloxy-2-hydroxypropoxypropyl-trimethoxysilan, (als Silizium-Verbindung Komponente e)) zu einer ganz besonderen Verbesserung der Beständigkeit der aus den betreffenden Zusammensetzungen erhältlichen Verbundgläsern gegenüber raschen Temperaturwechseln und der Haftfestigkeit sowie der Scherfestigkeit bei mechanischer Belastung.

Neben den Komponenten a) bis e) kann die erfindungsgemäße Klebstoffzusammensetzung noch in Summe 0,1 bis 6 Gew. %, bevorzugt 0,1 bis 5 Gew. % und besonders bevorzugt 0,2 bis 4 Gew. % jeweils bezogen auf das Gesamtgewicht der Klebstoffzsammensetzung, weitere - von den Komponenten a) bis e) verschiedene - üblicherweise zur Herstellung von Methacrylat-basierten Klebstoffen einsetzbare Additive enthalten. Ein eventueller Restmonomergehalt des eingesetzten Polybutylacrylats wird bei den Mengenangaben der vorliegenden Erfindung bei der Komponente c) mit berücksichtigt, d.h. die Komponente c) bezieht sich auf das Gesamtgewicht Polybutylacrylat + Verunreinigungen im eingesetzten Polybutylacrylat.

Bei den erfindungsgemäß verwendeten Additiven kann es sich beispielsweise um Polymerisationsinitiatoren, Photoinitiatoren, Schlagzähmodifizierungsmittel, bevorzugt in Form von Blockcopolymeren mit Weich- und Hartsegmenten, UV-Schutzmittel, UV-Absorber, sterisch gehinderte Amine (HALS), Netzmittel, Dispergieradditive, Antioxidantien, Molekulargewichtsregler und Polymerisationsinhibitoren handeln.

Liegt die erfindungsgemäße Klebstoffzusammensetzung als polymerisierbare Zusammensetzung vor, so enthält sie bevorzugt mindestens einen Polymerisationsinitiator. Die Polymerisationsreaktion kann grundsätzlich auf jede dem Fachmann geläufige Weise ausgelöst werden, beispielsweise unter Verwendung eines Radikalinitiators (z. B. Peroxid, Azoverbindung) oder durch Bestrahlen mit UV-Strahlen, sichtbarem Licht, α- Strahlen, β-Strahlen oder γ-Strahlen, oder eine Kombination derselben eingeleitet werden.

In einer bevorzugten Ausführungsform der vorliegenden Erfindung werden zur Initiierung der Polymerisation ein oder mehrere lipophile radikalische Polymerisationsinitiatoren verwendet. Die radikalischen Polymerisationsinitiatoren sind insbesondere deswegen lipophil, damit sie sich in der Mischung der Substanzpolymerisation lösen. Zu einsetzbaren Verbindungen gehören neben den klassischen Azoinitiatoren, wie Azoisobuttersäurenitril (AIBN), 1,1-Azobiscyclohexancarbonitril und Azobis-(2,4-dimethylvaleronitril), u. a. aliphatische Peroxyverbindungen, wie z. B. tert.-Amylperoxyneodecanoat, tert.-Butylperoxyneodecanoat, tert.-Amylperoxypivalat, tert.-Butylperoxypivalat, tert.-Amylperoxy-2-ethylhexanoat, tert.-Butylperoxy-2-ethylhexanoat, tert.-Amylperoxy-3,5,5,-trimethylhexanoat, tert.-Butylperoxy-3,5,5,-trimethylhexanoat, Ethyl-3,3-di-(tert.-amylperoxy)-butyrate, tert.-Butylperbenzoat, tert.-Butylhydroperoxid, Decanoylperoxid, Dilauroylperoxid, Benzoylperoxid, Bis(4-tert.-Butylcyclohexyl)peroxydicarbonat und beliebige Mischungen der genannten Verbindungen. Von den vorgenannten Verbindungen sind bevorzugt tert.-Butylperoxyneodecanoat, tert.-Butylperoxypivalat, tert.-Butylperoxy-2-ethylhexanoat, Dilauroylperoxid, Dibenzoylperoxid, Bis(4-tert.-Butylcyclohexyl)peroxydicarbonat. Ganz besonders bevorzugt ist Bis(4-tert.-Butylcyclohexyl)peroxydicarbonat.

In einer weiteren bevorzugten Ausführungsform der vorliegenden Erfindung erfolgt die Einleitung der Polymerisation unter Verwendung bekannter Photoinitiatoren durch Bestrahlen mit UV-Strahlen oder dergleichen. Hier können die gängigen, kommerziell erhältlichen Verbindungen wie z. B. Benzophenon, α,α-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Ethyl-2,4,6 - Trimethylbenzoylphenylphosphinate, Bisacylphosphinoxid und andere zum Einsatz kommen, wobei die genannten Photoinitiatoren allein oder in Kombination von zwei oder mehreren oder in Kombination mit einem der obigen Polymerisationsinitiatoren benutzt werden können.

Im Rahmen der vorliegenden Erfindung werden die Polymerisationsinitiatoren zweckmäßigerweise in Abhängigkeit der gewünschten Dicke der Klebeschicht bzw. Klebefolie ausgewählt. Besonders bevorzugt enthält die zu polymerisierende Zusammensetzung in der vorliegenden Erfindung sowohl thermische, insbesondere Azoinitiatoren oder Peroxide, als auch Photoinitiatoren.

Die Menge der Initiatoren kann in weiten Bereichen variieren. Bevorzugt kommen beispielsweise Mengen im Bereich von 0,01 bis 5,0 Gew.-%, bezogen auf das Gesamtgewicht der Klebstoffzusammensetzung zum Einsatz. Besonders bevorzugt werden Mengen im Bereich von 0,1 bis 2,0 Gew.-%, insbesondere Mengen im Bereich von 0,2 bis 1,5 Gew.-%, verwendet.

Wichtige Additive sind UV-Schutzmittel, die in Form von UV-Absorbern oder als Radikalfänger verfügbar sind. Unter den UV-Absorbern sind langlebige Produkte mit geringer Eigenfarbe besonders bevorzugt. Beispiele für geeignete UV-Absorber sind Benztriazole wie z.B. Tinuvin 1130 und Triazine wie z.B. Tinuvin 400 sowie einpolymerisierbare UV-Absorber mit (Meth)acrylatfunktion wie RUVA-93 von Otsuka Chemicals.

Als Radikalfänger können sterisch gehinderte Amine (HALS) eingesetzt werden. Beispiele für geeignete HALS-verbindungen sind: Bis (1-Octyloxy-2,2,6,6-tetramethyl-4-piperidyl)sebacat, Bis(1,2,2,6,6-pentamethyl-4-piperidyl)sebacat, Methyl-1,2,2,6,6-pentamethyl-4-piperidylsebacat, etc..

Molekulargewichtsregler, werden insbesondere bei der Herstellung der Klebefolien vorzugsweise zugesetzt, da über die Molekulargewichtsregelung die technische Verarbeitbarkeit wie Extrudierbarkeit oder als Schmelzkleber verarbeitbar geregelt wird. Beim Gießharzsystem wird in der Regel keine Regler benötigt werden. Bevorzugte Mengen an Molekulargewichtsreglern liegen im Bereich von 0,05 bis 0,5 Gew. %, bezogen auf die Gesamtzusammensetzung. Bevorzugte Molekulargewichtsregler sind 2-Ethylhexylthioglycolat, 2-Mercaptoethanol, n-Dodecylmercaptan, t-Dodecylmercaptan, Octylmercaptan, Methyl-3-mercaptopropionat, Pentaerythrittritetrathioglycolat

Besonders bevorzugte Klebstoffzusammensetzungen weisen folgende Zusammensetzungen der Komponenten a) bis e) auf.

In der bevorzugten Variante 1 sind die Komponenten a) bis e) in den nachfolgend genannten Mengen umfasst bzw. nicht umfasst

a) 20 bis 50 Gew. %, bevorzugt 20 bis 40 Gew. % Polyisobutylmethacrylat oder Isobutylmethacrylat oder einem Gemisch davon

b) 44 bis 79 Gew. % Butylacrylat

c) 0 Gew. % Polybutylacrylat, d.h. es ist kein Polybutylacrylat enthalten

d) 0,5 bis 3 Gew. %, bevorzugt 1 bis 2 Gew. %, (Meth)acrylat oder epoxyfunktionelles (Meth)acrylat, bevorzugt Glycidylmethacrylat

e) 0,5 bis 3 Gew. %, bevorzugt 1 bis 2 Gew. % vinylische bzw. (meth)acrylsubstituierte Trialkoxysilane, bevorzugt Gamma-Methacryloyloxypropyltrimethoxysilan

In der bevorzugten Variante 2 sind die Komponenten a) bis e) in den nachfolgend genannten Mengen umfasst

a) 20 bis 50 Gew. %, bevorzugt 20 bis 40 Gew. % Polyisobutylmethacrylat oder Isobutylmethacrylat oder einem Gemisch davon

b) 24 bis 79 Gew. % Butylacrylat

c) 5 bis 50 Gew. %, bevorzugt 5 bis 30 Gew. %, Polybutylacrylat

d) 0,5 bis 3 Gew. %, bevorzugt 1 bis 2 Gew. %, (Meth)acrylat oder epoxyfunktionelles (Meth)acrylat, bevorzugt Glycidylmethacrylat

e) 0,5 bis 3 Gew. %, bevorzugt 1 bis 2 Gew. % vinylische bzw. (meth)acrylsubstituierte

Trialkoxysilane, bevorzugt Gamma-Methacryloyloxypropyltrimethoxysilan

In der bevorzugten Variante 3 sind die Komponenten a) und b) in den nachfolgend genannten Mengen umfasst und die Komponenten c) bis e) nicht umfasst

a) 20 bis 50 Gew. %, bevorzugt 20 bis 40 Gew. % Polyisobutylmethacrylat oder Isobutylmethacrylat oder ein Gemisch davon

b) 50 bis 80 Gew. % Butylacrylat

In der bevorzugten Variante 4 sind die Komponenten a), b und c) in den nachfolgend genannten Mengen umfasst und die Komponenten d) und e) nicht umfasst

a) 20 bis 50 Gew. %, bevorzugt 20 bis 40 Gew. % Polyisobutylmethacrylat oder Isobutylmethacrylat oder ein Gemisch

davon
b) 30 bis 75 Gew. % Butylacrylat
c) 5 bis 50 Gew. %, bevorzugt 5 bis 30 Gew. % Polybutylacrylat,

In den bevorzugten Varianten 1 bis 4 beträgt die Summe der von den Komponenten a) bis e) enthaltenen Komponenten 100 Gew. %. Die Mengend er Komponenten a) bis e) sind jeweils innerhalb des genannten Bereiche auch ohne explizite Wertgrenzenangabe frei variierbar, so dass dadurch die Summe der o.g. Komponenten a) bis e) auf 100 Gew. % eingestellt werden kann. Vorzugsweise wird die Menge an Butylacrylat entsprechend den Mengenvorgaben der anderen Komponenten angepasst. Weitere Additive können in den zuvor genannten besonders bevorzugten Zusammensetzungen natürlich wie oben beschrieben ebenfalls enthalten sein.

Die Rezepturen mit den Komponenten d) und/oder e) werden bevorzugt für Gußpolymerisation eingesetzt. Zur Herstellung der Klebefolie können sie auch eingesetzt werden, hierbei sollten jedoch entsprechende Mengen Molekulargewichtsregler zugegeben werden, damit das Material noch fließfähig bleibt.

In den bevorzugten Ausführungsformen, in denen auf den Zusatz von Komponente d) und e) verzichtet wird, enthalten die Zusammensetzungen vorzugsweise mindestens 50 Gew.-% Butylacrylat oder 50 Gew.-% einer Mischung von Butylacrylat und Polybutylacrylat.

In einer speziellen Ausführungsform der vorliegenden Erfindung wird nur auf Komponente e) verzichtet. Bei dieser Variante ist es bevorzugt, dass (Meth-)acrylsäure als Komponente d) eingesetzt wird.

Die Klebstoffzusammensetzung wird erfindungsgemäß verwendet um Verbundkörper herzustellen, bevorzugt um einen Kunststoffkörper mit einem Glaskörper zu verkleben. Dies kann auf unterschiedliche Weise erfolgen.

In einer Variante A) ist es möglich einen 1. Körper, bevorzugt aus Glas, besonders bevorzugt eine Glasplatte, und einen 2. Körper, bevorzugt aus Kunststoff, besonders bevorzugt eine Kunststoffplatte, derart anzuordnen, dass dazwischen ein Hohlraum gebildet wird, danach diesen Hohlraum, mit einer erfindungsgemäßen Klebstoffzusammensetzung zu füllen und eine Klebeschicht herzustellen. Dazu kann die Klebstoffzusammensetzung entweder als Schmelze eingetragen werden oder- was bevorzugt ist- in Form einer polymerisierbaren Zusammensetzung eingefüllt und diese dann auspolymerisiert werden.

In einer Variante B) ist es möglich aus einer erfindungsgemäßen Klebstoffzusammensetzung, bevorzugt in Form einer polymerisierbaren Zusammensetzung zunächst eine Polymerfolie, bevorzugt mit einer Dicke von 0,01 bis 5 mm, bevorzugt 0,1 bis 3mm und besonders bevorzugt 0,3 bis 2 mm, herzustellen, diese dann zwischen einen 1. Körper, bevorzugt aus Glas, besonders bevorzugt eine Glasplatte, und einen 2. Körper, bevorzugt aus Kunststoff, besonders bevorzugt eine Kunststoffplatte anzuordnen und dann unter Einwirkung von Druck und Temperatur zu laminieren.

In einer Variante C) wird die erfindungsgemäße Klebstoffzusammensetzung verwendet um zwei Körper im Heißklebeverfahren miteinander zu verbinden.

Wird die erfindungsgemäße Klebstoffzusammensetzung in Form einer zu polymerisierenden Zusammensetzung verwendet, so wird diese zunächst hergestellt. Dazu wird vorzugsweise das Reaktionsprodukt der Umsetzung der Silizium-Verbindung der Formel (II) mit Wasser und/oder Säure mit den weiteren Komponenten a) bis d) vermischt und zweckmäßigerweise gerührt, bis man eine homogene Lösung erhält. Die Reihenfolge der Zusätze ist dabei nicht entscheidend, doch werden die in kleineren Mengen anwesenden Monomere vorzugsweise dem oder den überwiegenden Monomeren zugesetzt.

Die polymerisierbaren Zusammensetzungen sind auch ohne Zusatz eines Initiators reaktionsfähig, wobei ihre Reaktionsfähigkeit von der verwendeten Kombination abhängig ist. Sollen die Stoffgemische kurz nach der Herstellung verwendet werden, so ist kein Zusatz eines Inhibitors erforderlich. Ihre Lebensdauer lässt sich auch durch Lagern unter Kühlung wesentlich verlängern. Ist eine längere Lagerung erforderlich oder sollen sie auf normalen Handelswegen versandt werden, so ist die Verwendung von Polymerisationsinhibitoren in der Regel notwendig. Geeignete Inhibitoren sind Vinylpolymerisationsverhinderungsmittel wie tert.-Butylcatechin, Hydrochinon, Hydrochinon-monoethylether und 2,5-di-tert.-Butylhydrochinon. Die erforderlichen Mengen schwanken je nach Monomerenzusammensetzung und den Lagerungsbedingungen, sie liegen jedoch im Allgemeinen im Bereich von 0,005 bis 0,1 Gew.-%, bezogen auf das Gesamtgewicht der Zusammensetzung.

In der erfindungsgemäßen Variante A) wird die Klebstoffzusammensetzung z. B. zwischen einer, bevorzugt dünnen, Glasplatte und einer Kunststoffplatte, die entsprechend in einer Polymerisationszelle gehalten werden, eingebracht und eine Klebeschicht hergestellt. Dies führt zu Verbundkörpern aus einer transparenten Klebeschicht zwischen fest verbundener Glas- und Kunststoffscheibe.

Die erfindungsgemäß einsetzbaren Polymerisationszellen unterliegen keinen besonderen Beschränkungen, vielmehr sind alle aus dem Stand der Technik bekannten einsetzbar. Beispielsweise können Polymerisationszellen aus Glas und/oder polierten Edelstahlplatten verwendet werden.

Obwohl Sauerstoffspuren bekanntermaßen die Polymerisation meist stören und unter Umständen sogar verhindern können, ist es im Rahmen der vorliegenden Erfindung im Allgemeinen nicht notwendig, die erfindungsgemäßen Zusammensetzungen - wenn polymerisierbare Zusammensetzungen verwendet werden - vor der Polymerisation zu

entgasen. Dennoch wird gemäß einer bevorzugten Ausführungsform der vorliegenden Erfindung die erfindungsgemäße Zusammensetzung entgast, um eingeschlossene Luftblasen sowie gelösten Sauerstoff zu entfernen. Weiterhin wird die Polymerisation vorzugsweise unter Sauerstoffausschluss durchgeführt.

Die für die Polymerisation zu wählende Polymerisationstemperatur ist dem Fachmann offensichtlich. Sie wird in erster Linie durch den bzw. die gewählten Initiator(en) und die Art und Weise der Initiierung (thermisch, durch Bestrahlung u. a.) bestimmt. Es ist bekannt, dass die Polymerisationstemperatur die Produkteigenschaften eines Polymeren beeinflussen kann. Daher werden im Rahmen der vorliegenden Erfindung Polymerisationstemperaturen im Bereich von 10,0°C bis 110,0°C, zweckmäßigerweise im Bereich von 20,0°C bis 100,0°C, insbesondere im Bereich von 20,0°C bis 90,0°C bevorzugt. In einer besonders bevorzugten Ausführungsform der vorliegenden Erfindung wird die Reaktionstemperatur während der Reaktion, vorzugsweise stufenweise erhöht. Weiterhin hat sich auch ein Tempern bei erhöhter Temperatur, beispielsweise bei 110°C, gegen Ende der Reaktion als zweckmäßig erwiesen, insbesondere wenn keine photochemische Nachhärtung erfolgen soll.

Im Falle einer Verklebung mittels polymerisierbarer Zusammensetzung eröffnet die thermische Polymerisation bei höherer Temperatur die Möglichkeit den erfindungsgemäßen Klebstoff bei Gegenwart eines ausreichenden Anteils Butylacrylat moderat zu vernetzen und dadurch direkt die Flexibilität und Elastizität der Klebung gezielt zu steuern. Ein Indiz für die ausreichende Vernetzung ist der Verlust der Fließfähigkeit des Polymerisats, was z.B. durch den Verlust der Acetonlöslichkeit angezeigt wird. Daher ist die thermische Polymerisation eine bevorzugte Ausführungsform für die Verklebung über eine polymerisierbare Zusammensetzung.

Die Bedingungen, vor allem Druck und Polymerisationszeit hängen naturgemäß vor allem von der Wahl des Initiatorsystems ab. Wählt man nur eine Photoinitiierung als alleiniges Initiatorsystem, so wird vorzugsweise bei möglichst niedriger Temperatur und drucklos gearbeitet. Der Einfachheit halber empfiehlt sich eine Härtung bei Raumtemperatur, wobei die Temperatur im Fügeteil durch die Polymerisationswärme abhängig von der Dicke der Kleberschicht und abhängig von der Zusammensetzung und Reaktivität der Klebstoffzusammensetzung berücksichtigt werden muss. Bei einem höheren Anteil der polymerisierbaren Komponenten relativ zu den gelösten Polymeren wird wie dem Fachmann bekannt mehr Polymerisationswärme freigesetzt. Das gleiche gilt für Zusammensetzungen mit einem höheren Anteil reaktiverer (Acrylat)Monomere in der Zusammensetzung.

Bei einer thermischen Polymersation wird die Polymerisationstemperatur in Abhängigkeit von der Zerfallstemperatur des Initiatorsystems so gewählt, dass eine moderate Polymerisationsreaktion stattfindet. Dabei ist die Wärmeab- und zufuhr durch die mit der polymerisierbaren Mischung in Kontakt befindlichen Fügeteile und die Wärmetönung durch die Zusammensetzung der polymerisierbaren Mischung sowie die Dicke der Kleberschicht zu berücksichtigen. Vorzugsweise wird die Polymerisationstemperatur so gewählt, dass die Polymerisation drucklos erfolgen kann und keine Blasenbildung im Polymerisat auftritt.

Besonders bevorzugt wird in Variante A) zunächst eine thermische Härtung der polymerisierbaren Zusammensetzung, bevorzugt bei 60 bis 100 °C für 30 bis 90 min und anschließender Endhärtung mittels UV-Strahlung, bevorzugt bei 20 bis 80°C, besonders bevorzugt 20 bis 40°C durchgeführt. Eine besonders geeignete UV-Quelle ist ein UV-Durchlauftrockner mit eisendotiertem Quecksilberdampfstrahler und 90 % Lampenleistung und einer Leistung von 120 Watt/cm in dem bevorzugt bei 3 m/min Vorschubgeschwindigkeit und 2 Durchläufen gearbeitet wird.

In der Variante B) wird aus der Klebstoffzusammerisetzung zunächst eine Folie hergestellt. Dies kann nach dem Fachmann bekannten Verfahren erfolgen.

Bevorzugt wird dabei eine polymerisierbare Zusammensetzung aus den Komponenten a) bis e) und ggf. einem oder mehreren thermischen Polymerisationsinitiatoren und/oder einem oder mehreren Photoinitiator sowie optional einem Molekulargewichtsregler in Polymerisationskammern gefüllt und zum Entfernen der eingerührten Luftblasen im Vakuumtrockenschrank, bevorzugt 60 min bei 400 mBar, entgast. Eine Kammer besteht beispielsweise aus zwei äußeren Glasscheiben (DIN A4), zwei innen liegenden PET-Folien (DIN A4), einer rundum laufenden Distanzschnur und Klammern zum Halten der Form.

Besonders bevorzugt wird zur Herstellung der Polymerfolie zunächst eine thermische Härtung der polymerisierbaren Zusammensetzung, bevorzugt bei 60 bis 90 °C für 30 bis 90 min und anschließend eine Härtung mittels UV-Strahlung, bevorzugt bei 20 bis 80°C durchgeführt.

In einer alternativen bevorzugten Ausführungsform erfolgt die Härtung durch UV-Strahlung in einer Art und Weise, die zu starke Wärmetönung (Blasenbildung) vermeidet. Dazu wird die Polymerisationskammer bevorzugt mit dem flüssigen Monomer-Polymersirup in 3 Durchläufen mit 5m/min, 3 Durchläufen mit 4m/min, 3 Durchläufen mit 3m/min und 3 Durchläufen mit 2m/min durch die unter Variante A) genannte UV-Polymerisationsanlage gefahren. Man erhält vollkommen klare und transparente Polymerisate, die sich leicht von den PET-Folien abziehen lassen. Eventuelle Inhomogenitäten der Schichtdicke lassen sich problemlos durch Pressen bei 80°C und abhängig vom Molekulargewicht bei 30 bis 100 kN ausgleichen. Dabei benötigen höhermolekulare Varianten einen höheren Pressdruck als niedermolekulare Varianten.

Mit den erfindungsgemäßen Klebstoffzusammensetzungen bzw. den daraus hergestellten Folien können Verbundkörper mit besonders guten Eigenschaften hergestellt werden.

Vorzugsweise weisen die Verbundkörper eine Dicke der Klebeschicht von 0,3 bis 2 mm, insbesondere im Bereich von 0,5 bis 1 mm auf. Die Dicke kann, abhängig von der Klebstoffzusammensetzung, wichtig sein da die elastische Kleberschicht thermische Spannungen, die durch unterschiedliche thermische Ausdehnungskoeffizienten von Kunststoff und Glas entstehen, ausgleichen muss und die maximal zulässige Dauer-Spannung, die auf z.B. PMMA ohne Schadensbildung einwirken darf, und wie dem Fachmann bekannt, einen Betrag von 5 MPa nicht überschreiten darf. Entsprechend der Dimension der Verbundscheibe werden daher eine Dicke und eine Flexibilität der Kleberschicht so eingestellt, dass die Spannung von 5 MPa im Falle des PMMA nicht überschritten wird. Kleine Scheiben kommen daher mit einer dünneren Kleberschicht aus während größere Scheiben zum Unterschreiten der maximal zulässigen Spannung eine dickere Schicht benötigen. Aus Gewichts-, Kosten- und Designgründen wird die Dicke der Kleberschicht so eingestellt, dass sie innerhalb des Einsatzbereichs zwischen -40°C und +80°C alle Spannungen ausgleichen kann aber nicht dicker als erforderlich ist. Dadurch gelingt es, besonders dünne Verbundscheiben mit geringem Gewicht und guter Beständigkeit ohne Neigung zur Delamination unter den geforderten Einsatzbedingungen zu erhalten.

Um besonders leichte Verbundkörper herstellen zu können wird erfindungsgemäß besonders bevorzugt Dünnglas mit einer Dicke von 0,01 bis 2 mm, bevorzugt 0,1 bis 1,5 mm, verwendet. Die Verwendung solch dünner Gläser ist insbesondere auf Grund des erfindungsgemäßen Klebers möglich.

Erfindungsgemäß bezeichnet Glas Stoffe im amorphen, nichtkristallinen Festzustand. Der Glaszustand lässt sich physikalisch-chemisch als eingefrorene unterkühlte Flüssigkeit bzw. Schmelze auffassen. Bei hinreichend großer Abkühlgeschwindigkeit einer Schmelze oder bei der Kondensation von Molekülen aus der Dampfphase auf extrem gekühlte Substrate lässt sich praktisch jeder Stoff metastabil in den Glaszustand überführen. Im Rahmen der vorliegenden Erfindung wird unter Glas insbesondere anorganische, vorzugsweise oxidische Schmelzprodukte verstanden, die durch einen Einfriervorgang ohne Auskristallisation der Schmelzphasenkomponenten in den festen Zustand überführt werden. Erfindungsgemäße besonders bevorzugte Gläser umfassen abgekühlte Schmelzen, welche Siliciumdioxid ($SiO_2$), Calciumoxid (CaO), Natriumoxid ($Na_2O$) mit z.T. größeren Mengen von Bortrioxid ($B_2O_3$), Aluminiumoxid ($Al_2O_3$), Bleioxid (PbO), Magnesiumoxid (MgO), Bariumoxid (BaO) und/oder Kaliumoxid ($K_2O$), insbesondere Siliciumdioxid ($SiO_2$), enthalten. Für weitere Details wird auf die gängige Fachliteratur, beispielsweise auf CD Römpp Chemie Lexikon - Version 1.0, Stuttgart/New York; Georg Thieme Verlag; 1995; Stichwort: Glas verwiesen. Besonders bevorzugt sind Silikatglasscheiben, z.B. Kalk-Natron-Glas, eisenarmes Weißglas oder besonders bruchfestes chemisch vorgespanntes Glas, wie es z.B. unter dem Markennamen Gorilla-Glas von Corning oder Xensation von Schott vertrieben wird.

Die erfindungsgemäßen Verbundkörper weisen bevorzugt mindestens eine Kunststoffschicht auf. Dabei handelt es sich bevorzugt um eine Kunststoffscheibe mit einer Dicke von 0,5 bis 8 mm, bevorzugt 1 bis 4 mm. Die Dicke der Kunststoffscheibe ist wichtig um zum einen eine ausreichende Steifigkeit der Verbundscheibe, zum anderen möglichst geringes Gewicht des Gesamtverbundes und darüber hinaus eine gute thermische und akustische Isolation zu erhalten.

Als Material für die Kunststoffscheibe können transparente Kunststoffhalbzeuge, die über Extrusion oder Gußverfahren erhältlich sind, verwendet werden. Bevorzugt werden PMMA, Polycarbonat, Styrol-Copolymere, Polyester, transparentes mikrokristallines Polyamid wie z.B. Trogamid CX der Fa. Evonik Industries und ganz besonders PMMA verwendet.

Bei der Auswahl des Kunststoffmaterials sind solche Kunststoffe, die sich außer einen hohen Transparenz und Verzeichnungsarmut noch durch hervorragende Witterungsbeständigkeit auszeichnen, besonders bevorzugt. Die Kunststoffe können einen besonders effektiven UV-Schutz und/oder eine transparente Einfärbung enthalten; ebenfalls kann eine infrarotreflektierende oder infrarotabsorbierende, eine thermotrope oder phototrope Ausrüstung des Materials bei Bedarf integriert werden.

In speziellen Ausführungsformen können aber auch Kunststoffe mit Füllstoffen, z. B. PLEXIGLAS Mineral; Wood Plastic Composites oder Komposite aus Kunststoff oder Kunstharz mit anorganischem Füllstoff oder Fasern als Kunststoffkörper verwendet werden.

Erfindungsgemäß bevorzugt sind Verbundkörper aus Kunststoff und Glas. Es ist selbstverständlich, dass mit den erfindungsgemäßen Klebstoffen jedoch auch Glas mit Glas und Kunststoff mit Kunststoff verklebt werden können. Auch Verklebungen von und mit anderen Materialien von z. B. Stein oder Metall, z. B. Aluminium, Aluminiumlegierungen, Stahl, Buntmetalle, Hölzer, Schichtverbundwerkstoffe, oder Keramik sind möglich.

Besonders bevorzugte Verbundkörper zeichnen sich dadurch aus, dass sie

- mindestens einen Kunststoffkörper, bevorzugt eine Kunststoffplatte, besonders bevorzugt mit einer Dicke von 0,5 bis 8 mm, und ganz besonders bevorzugt bestehend aus einem Homo- oder Copolymer oder aus einem Polymerblend von Poly(meth)acrylaten
- mindestens zwei weitere Körper, bevorzugt mindestens zwei Glasscheiben, bevorzugt mit einer Dicke von 0,01 bis 2 mm, und ganz besonders bevorzugt bestehend aus Kalk-Natronglas oder eisenarmem Weißglas oder chemisch vorgespanntem Glas,
- jeweils zwischen dem Kunststoffkörper und den Glasscheiben eine Klebeschicht aus einer Klebstoffzusammensetzung nach einem der Ansprüche 1 bis 5

umfassen. Die Schichtreihenfolge kann beliebig in der genannten Weise fortgeführt und somit vielschichtige Verbundkörper mit besonders stabilen Eigenschaften erhalten werden.

In einer anderen besonders bevorzugten Ausführung können Verbundkörper aus einer im Verhältnis zur Polymerfolie dickeren Glasscheibe, bevorzugt 2 bis 8 mm, besonders bevorzugt 3 bis 6 mm, als Träger für eine mittels erfindungsgemäßem Kleber befestigte, bevorzugt strukturierte, Polymerfolie, besonders bevorzugt eine Folie mit Fresnelstrukturen hergestellt werden. Die Verbundkörper werden zur Anwendung in Solarmodulen für konzentrierte Photovoltaik hergestellt. Geeignete Strukturen sind z.B. sogenannte Fresnelstrukturen, die als flache Linse das Sonnenlicht bündeln. Bei dieser Anwendung werden üblicherweise Solargläser, bei denen es sich im Allgemeinen um eisenarmes Weißglas handelt, als Glaskomponente eingesetzt. Die zur Verklebung gebrachte strukturierte Polymerfolie kann eine PMMA-Folie mit einer darin direkt abgeformten Struktur sein. In einer anderen Ausführungsform kann auch eine Folie mit einer über eine darauf aufgebrachte strukturierte Beschichtung versehenen Prägung zum Einsatz kommen.

Um besonders leichte Verbundkörper zu erhalten, können die einzelnen Kunststoff- oder Glasschichten auch teilweise hohl ausgeführt werden. Die Hohlräume können evakuiert oder mit Inertgasen gefüllt sein.

Die erfindungsgemäßen Verbundkörper können in allen in der Beschreibung des Standes der Technik genannten Anwendungsgebieten eingesetzt werden, insbesondere Fenster, insbesondere Dachfenster, Sicherheitsverglasung, Fahrzeugverglasung, Automobilverglasung, Eisenbahnen, Schiffe, Flugzeuge, Helikopter, Solarmodule, einbruchhemmende und beschusssichere Verglasungen, Displays, Touch Panels, Gewächshäuser und Wintergärten.

Meß- und Prüfmethoden:

a) Haze (ASTM D1003)
b) Lichttransmission (DIN EN 410)
c) Zugfestigkeit (ISO 527-3/2/50), Teil 3 Folien, Probekörper 15 mm Parallelstreifen, Prüfgeschwindigkeit 50 mm/min, Einspannlänge 50 mm
d) Bruchdehnung (ISO 527), Bedingungen wie bei der Bestimmung der Zugfestigkeit
e) Shore-Härte (ISO 868), Shore A,
f) DSC-Glastemperatur , DIN EN 11357, Teil 2, Glastemperatur, zweiter Aufheizzyklus, Heizrate 10°C/min,
g) Viskosität (DIN 3219), Ausgabe Okt. 1994,
h) Scherfestigkeit (DIN EN 1465), 25 mm Streifen, überlappte Länge 10 mm,

Prüfgeschwindigkeit 5 mm/min

Die nachfolgenden Beispiele dienen zur näheren Erläuterung und zum besseren Verständnis der vorliegenden Erfindung, schränken diese aber in keiner Weise ein.

Beispiele:

1. Hydrolyse der Silankomponente e)

10g Gamma-Methacryloyloxypropyltrimethoxysilan werden mit + 0,4g Methacrylsäure und 2g Wasser eingewogen und gerührt. Es bildet sich zunächst eine trübe Mischung. Nach ca. 2h entsteht daraus jedoch eine klare Lösung, die zur Herstellung der erfindungsgemäßen polymerisierbaren Zusammensetzungen verwendet wurde.

2. Allgemeine Beschreibung der Herstellung der Verbundscheiben

Eine erfindungsgemäße polymerisierbare Zusammensetzung aus

- Polyisobutylmethacrylat (Degalan P 26 der Firma Evonik)
- Butylacrylat
- optional Polybutylacrylat (Acronal 4F der Firma BASF)
- optional Glycidylmethacrylat
- optional der hydrolysierten Silankomponente aus Beispiel 1

- einem thermisch aktivierbaren Polymerisationsinitiator Bis(4-tert.-Butylcyclohexyl)-peroxydicarbonat

- einem Photoinitiator 2,4,6-Trimethylbenzoyldiphenylphosphinoxid (Lucirin TPO)

wird gemäß den Mengenangaben in den nachfolgenden Tabellen 1 und 2 durch einfaches Vermischen und rühren hergestellt. Um eingerührte Luftblasen zu entfernen, werden die Reaktivlösungen vor dem Einfüllen in die Polymerisationskammern 60min bei 400mbar im Vakuumtrockenschrank bei Raumtemperatur evakuiert.

Die Herstellung der Verbundscheiben erfolgt durch Kammerpolymerisation.

Eine Kammer besteht jeweils aus einer Glasscheibe (320 x 320 x 8mm), und einer extrudierten PMMA - Platte (PLEXIGLAS® 0A000) gleicher Abmessung (Dicke siehe Angabe in den nachfolgenden Beispielen), zwischen denen eine ca. 2mm dicke Teflonschnur als Abstandhalter rundum eingelegt ist. Um die Dichtigkeit nach dem Einfüllen der Reaktivlösung sicherzustellen, ist die Kammer mit Federklammern versehen.

Das Einfüllen der niedrigviskosen Reaktivlösungen erfolgt in üblicher Weise mithilfe eines Einfüllbeutels.

Das Einfüllen der hochviskosen Reaktivlösungenerfolgt dagegen durch luftblasenfreies Ausgießen der Reaktivlösung (ca. 200g) auf eine Glasplatte 32 x 32 cm. Das rundum aufgeklebte Teflonband dient dabei als äußere Barriere. Anschließend wird die PMMA-Patte 32 x 32 cm seitlich am Rand der Glasplatte angesetzt und dann langsam nach unten abgesenkt. Dabei wird die Lösung durch das Gewicht der PMMA-Platte nach allen Seiten auseinandergepresst, so dass fast die gesamte Kammer ausgefüllt wird. Nach anschließendem Anbringen der Federklammmern wird auch der restliche Teil der Luft verdrängt, so dass die Kammer danach vollständig gefüllt ist.

Die Polymerisation erfolgt schließlich in einem Trockenschrank innerhalb von 60 min bei 80°C. Anschließend werden die Verbundscheiben unter einer UV-Anlage (UV-Durchlauftrockner, Hersteller Print Concept, 120 Watt /cm, eisendotierter Quecksilberdampfstrahler) bei Raumtemperatur nachgehärtet (2 Durchläufe mit jeweils 3m/min, bei 90% Lampenleistung).

3. Bestimmung der optischen, mechanischen Eigenschaften von Verbundglasscheiben sowie der rheologischen Eigenschaften der Reaktivlösung

Gemäß der allgemeinen Herstellvorschrift aus Beispiel 2 (Dicke der Glasscheibe 4 mm) wurden die Verbundglasscheiben A bis I hergestellt. Die Zusammensetzungen der Reaktivlösungen sowie die optischen und mechanischen Eigenschaften sind in der nachfolgenden Tabelle 1 angegeben.

Tabelle 1

| | Einheit | A | B | C | D | E | F | G | H | I |
|---|---|---|---|---|---|---|---|---|---|---|
| a) Polyisobutylmethacrylat | | 20,00 | 20,00 | 30,00 | 40,00 | 50,00 | 40,00 | 30,00 | 40,00 | 40,00 |
| c) Acronal 4F | Gew.-teile | 20,00 | - | - | - | - | 20,00 | 10,00 | 10,00 | 10,00 |
| b) Butylacrylat | Gew.-teile | 57,00 | 77,00 | 67,00 | 57,00 | 47,00 | 37,00 | 57,00 | 47,00 | 60,00 |
| d) Glycidylmethacrylat | Gew.-teile | 1,70 | 1,70 | 1,70 | 1,70 | 1,70 | 1,70 | 1,70 | 1,70 | - |
| e) Hydrolysierte Silan-Lösung aus Beispiel 1 | Gew.-teile | 1,30 | 1,30 | 1,30 | 1,30 | 1,30 | 1,30 | 1,30 | 1,30 | - |
| 2,4,6-Trimethylbenzoyl-diphenylphosphinoxid | Gew.-teile | 0,50 | 0,50 | 0,50 | 0,50 | 0,50 | 0,50 | 0,50 | 0,50 | 0,50 |
| Lucirin TPO | Gew.-teile | 0,50 | 0,50 | 0,50 | 0,50 | 0,50 | 0,50 | 0,50 | 0,50 | 0,50 |
| Anwendungstechnische Tests der Verbundscheibe | | | | | | | | | | |
| Lichttransmission | | | | | | | | | | |
| bei 20°C | [%] | 92,10 | 90,30 | 91,20 | 92,00 | 92,30 | 92,20 | 92,20 | 91,90 | 92,30 |
| bei 80°C | [%] | 92,10 | 90,00 | 91,30 | 92,00 | 92,30 | 91,30 | 92,20 | 91,90 | 92,30 |
| Haze | | | | | | | | | | |
| bei 20°C | [%] | 0,37 | 3,35 | 2,39 | 0,85 | 0,30 | 0,21 | 0,72 | 0,27 | 0,19 |
| bei 80°C | [%] | 0,43 | 3,40 | 2,44 | 0,89 | 0,59 | 0,84 | 0,72 | 0,36 | 0,44 |
| Zugfestigkeit | [MPa] | 0,61 | 0,56 | 1,30 | 2,90 | 4,40 | --- | 1,4 | 2,20 | 2,00 |
| Bruchdehnung | [%] | 182,10 | 222,40 | 249,70 | 291,50 | 282,00 | --- | 235,8 | 417,8 | 736,20 |
| Shore-Härte | | 48,00 | 54,00 | 57,00 | 74,00 | 91,00 | --- | 58,0 | 70,00 | 55,00 |
| Anwendungstechnische Tests der Klebeschicht | | | | | | | | | | |
| Glastemperatur der Klebeschicht | [°C] | -39 | -40 | -35 | -33 | -31 | | -37 | -30 | -32 |
| Anwendungstechnische Tests der Reaktivösung | | | | | | | | | | |
| Viskosität der Reaktivlösung vor Polymerisation | [mPa*s] | 298 | 45 | 178 | 930 | 3410 | | 560 | 1970 | 1930 |

Die Glas / PMMA-Verbundscheiben gemäß den Beispielen A bis zeigen durchweg eine gute Transparenz (Lichttransmission = 90 bis 92%), und eine geringe bis sehr geringe Trübung (Haze = 3,5% bis 0,2%). Ein Einfluss der Temperatur auf die Klarheit der Verbundscheiben ist nicht feststellbar, d.h. der erfindungsgemäße Kleber ist selbst bei hohen Temperaturen sehr gut anwendbar.

Hinsichtlich der mechanischen Eigenschaften ist festzustellen, dass sich mit zunehmendem Anteil der Komponente a) (20% bis 50%) die Zugfestigkeit der Verbundschichten verbessert (von 0,56 MPa bis 4,4 MPa). Die Verbundschichten sind flexibel und zeigen gummiähnliches Verhalten.

Durch den Polyisobutylmethacrylatanteil und den Polybutylacrylatanteil können die Glastemperatur und die Viskosität zielgerichtet eingestellt werden.

## 4. Bestimmung der Scherfestigkeiten von Verbundglasscheiben

Die Versuche wurden mit polymerisierbaren Zusammensetzungen gemäß den Beispielen A bis I durchgeführt. In Abwandlung zu den Vorgaben von Tabelle 1 enthielten die polymerisierbaren Zusammensetzungen in den Beispielen $A^*$ bis $C^*$ hierbei jedoch jeweils 1 Gew. % des thermischen und des Photoinitiators und die polymerisierbaren Zusammensetzungen in den Beispielen $D^*$ bis $I^*$ hierbei jedoch jeweils 0,5 Gew. % des thermischen und des Photoinitiators. Die Dicke der Glasscheibe betrug 5 mm.

Es wurde gefunden, dass die Scherfestigkeit in den Beispielen $B^*$ bis $E^*$, d.h. mit zunehmendem Isobutylmethacrylatanteil zunimmt (0,8 bis 2,8 MPa*s). Der Ersatz von Butylacrylat durch Polybutylacrylat hat keine signifikanten Auswirkungen auf die Scherfestigkeit. Ein Vergleich der Beispiele $D^*$ und $I^*$ zeigte jedoch, dass das Weglassen der Haftvermittelnden Komponenten d) und e) eine Reduktion der Scherfestigkeit von 2,5 MPa*s auf 1,6 MPa*s nach sich zog. Dieses Ergebnis belegt zum einen, dass auch ohne die haftvermittelnden Komponenten eine hinreichende Scherfestigkeit erreicht werden kann, zum anderen zeigt es aber auch, dass durch Zusatz der Komponenten d) und e) die Scherfestigkeit noch einmal gezielt gesteigert und somit individuell angepasst werden kann.

## 5. Klimawechseltest

Ziel dieser Versuche ist es, erfindungsgemäße und nicht erfindungsgemäße Verbundscheiben einem Klimawechseltest zu unterziehen, um herauszufinden, ob bzw. welche Verbundscheiben die dabei auftretenden Temperaturwechsel (zwischen -30°C bis +80°C) schadlos überstehen (ohne Delamination, Eintrübung und Verzug). Ferner soll die Anwendbarkeit von Dünnglasscheiben in den Verbundscheiben getestet werden.

Zur Durchführung des Klimawechseltests wurden weitere Beispiele J bis S wie folgt hergestellt. 4 mm dicke PMMA-Platten (PLEXIGLAS® 0A000) wurden dabei mit 1 mm dicken Glasplatten zu Verbundscheiben verklebt. Die Glas/PMMA-Verbundscheiben wurden durch Polymerisation im Gussverfahren hergestellt. Dabei werden Reaktivlösungen gemäß den in Tabelle 2 angegebenen Zusammensetzungen in Kammern (300 x 200mm) eingefüllt und 60min bei 80°C im Trockenschrank thermisch polymerisiert. Danach folgt die Endhärtung (UV-Polymerisation) unter einer UV-Anlage (UV-Durchlauftrockner, Hersteller Print Concept, 120 Watt /cm, eisendotierter Quecksilberdampfstrahler) (2 Durchläufe mit 3m/min, bei 90% Lampenleistung).

Die verwendeten Kammern bestanden aus einer 4mm dickem PMMA (XT)-Platte und einer 1 mm dicken Glasplatte, die durch eine rundum eingelegte 2mm dicke Teflonschnur distanziert war. Um den Bruch der dünnen Glasscheibe beim Zusammenbau der Kammer zu verhindern (Fixierung der Kammer erfolgt mit Federklammern) wurde die dünne Glasscheibe zusätzlich mit einer dickeren Glasscheibe (4mm) belegt.

Die gegossenen PMMA-Verbundscheiben wurden danach für den Klimawechseltest zunächst durch Lasern auf passende Größe (220 x 100mm) zugeschnitten und anschließend dem Klimawechseltest unterzogen (Temperaturverlauf: siehe Abbildung 1).

Der Klimawechseltest wurde im Bereich zwischen +80°C (Temperaturmaximum) und -30°C (Temperaturminimum ), innerhalb eines Zeitraums von 7 Tagen durchgeführt. Dabei wurden die Verbundscheiben mit insgesamt 14 Temperaturwechseln thermisch belastet.

Tabelle 2:

| | Einheit | J | K | L | M | N | O | P | Q | R | S | VB1 |
|---|---|---|---|---|---|---|---|---|---|---|---|---|
| a) Polyisobutylmethacrylat | Gewichts -teile | 20,00 | 20,00 | 30,00 | 40,00 | 50,00 | 30,00 | 30,00 | 40,00 | 40,00 | 60,00 | - |
| c) Acronal 4F | Gewichts -teile | 20,00 | - | - | - | - | 20,00 | 10,00 | 10,00 | 10,00 | - | - |
| b) Butylacrylat | Gewichts -teile | 57,00 | 77,00 | 67,00 | 57,00 | 47,00 | 47,00 | 57,00 | 47,00 | 50,00 | 37,00 | - |
| d) Glycidylmeth -acrylat | Gewichts -teile | 1,70 | 1,70 | 1,70 | 1,70 | 1,70 | 1,70 | 1,70 | 1,70 | - | 1,70 | 1,70 |
| e) Hydrolysierte Silan-Lösung aus Beispiel 1 | Gewichts -teile | 1,30 | 1,30 | 1,30 | 1,30 | 1,30 | 1,30 | 1,30 | 1,30 | - | 1,30 | 1,30 |
| Bis(4-tert.-Butylcyclohexyl)-peroxydicarbonat | Gewichts -teile | 0,50 | 0,50 | 0,50 | 0,50 | 0,50 | 0,50 | 0,50 | 0,50 | 0,50 | 0,50 | - |
| Lucirin TPO | Gewichts -teile | 0,50 | 0,50 | 0,50 | 0,50 | 0,50 | 0,50 | 0,50 | 0,50 | 0,50 | 0,50 | - |
| Zusätzliche Komponenten für VB1 | | | | | | | | | | | | |
| MMA | Gewichts teile | - | - | - | - | - | - | - | - | - | - | 97 |
| 2,2'-Azobis-(2,4-dimethylvaleronitril) | Gewichts teile | - | - | - | - | - | - | - | - | - | - | 0,01 |
| 2,2'-Azobis- isobutyronitril | Gewichts teile | - | - | - | - | - | - | - | - | - | - | 0,03 |
| Anwendungstechnische Tests | | | | | | | | | | | | |
| Haze | | | | | | | | | | | | |
| Vor Test bei 20°C | [%] | 1,26 | 1,17 | 0,9 | 0,89 | 0,91 | 1,07 | 1,8 | 0,81 | 0,71 | 1,43 | - |
| Nach Test bei 20 °C | [%] | 1,35 | 1,87 | 0,89 | 1,02 | 0,81 | 1,52 | 2,3 | 1,36 | 0,95 | 0,6 | - |

Alle Proben bestanden den Klimawechseltest. Das gilt überraschender Weise auch für die Probe R) ohne die Haftvermittlerkomponenten d) und e). Sämtliche Proben waren nach dem Klimawechseltest unverändert (keine Delamination) und zeigten somit eine gute Beständigkeit gegen Temperaturwechsel zwischen -30°C und +80°.

Hinsichtlich der optischen Eigenschaften erkennt man beim Vergleich der Proben untereinander keinen eindeutigen Trend. Darüber hinaus ist bei den einzelnen Proben auch keine signifikante Veränderung der Trübung infolge des Klimawechseltests feststellbar. Insgesamt kann man jedoch die optischen Eigenschaften der Proben sowohl vor, als auch nach dem Klimawechseltest als hinreichend gut bezeichnen (siehe Tabelle 2).

Anders dagegen die Probe des Vergleichsbeispiels VB1, welche der in der WO03078485A1 explizit genannten Reaktivlösung sehr ähnlich ist. Hierbei wurde eine PMMA basierte Verbundschicht verwendet welche sich beim Abkühlen auf Raumtemperatur schüsselartig verzog, so dass es letztendlich zum Glasbruch kam. Der Klimawechseltest konnte damit gar nicht durchgeführt werden.

**6. Herstellung von Verbundsystemen aus einem dicken Solarglas und einer dünnen PMMA Folie durch Kammerpolymerisation mit bzw. ohne Komponente e)**

Analog der Beschreibung in Beispiel 2 wurden auch Verbundsysteme auf Basis von Solarglas-Scheiben mit einer schlagzäh ausgerüsteten PMMA-Folie im Gussverfahren hergestellt. Die in den Beispielen verwendete Folie war nicht strukturiert, die Verwendung einer strukturierten Folie, z. B. mit Fresnelstruktur, wäre jedoch genauso möglich.

In einer Polymerisationskammer wurde eine 2.95 mm dicke Solarglasscheibe (Fa. Saint Gobain, Diamant Solar, Angabe Hersteller 2.85mm, 200x300mm) und eine schlagzähe PMMA Folie der Fa. Evonik Industries der Dicke 0.55 mm so angeordnet, dass sie durch eine rundum eingelegte 2 mm dicke Teflonschnur (Fa. Hecker) distanziert sind. Aus Gründen der Stabilität wird die PMMA Folie mit einer Stützplatte aus Glas der Dicke 3 mm (die nachher nicht Bestandteil des Verbundes wird) versehen. Die Folie wird seitlich mit Klebefilm der Fa. Tesa fixiert. Um die Dichtigkeit nach dem Einfüllen der Reaktivlösung sicherzustellen, ist die Kammer mit Federklammern versehen.

In Tabelle 3 sind die Gewichtsangaben der Einzelkomponenten und die Gesamtansatzmenge aufgeführt. Gemäß den Mengenangaben in der Tabelle 3 wird die jeweilige Monomer-Polymerlösung durch Vermischen und Rühren der Einzelkomponenten hergestellt. In einigen Beispielen wird die zusätzliche Verwendung von Komponente e) beschrieben, die zunächst als Vorlösung angesetzt wird. Die Herstellung wird wie in Beispiel 1 (Hydrolyse der Silankomponente) durchgeführt. Entsprechend der Tabelle 3 wird ein Teil dieser Vorlösung zu der Monomer-Polymer-Lösung hinzugegeben.

Um die Luftblasen zu entfernen, werden die polymerisierbaren Zusammensetzungen vor dem Einfüllen in die Kammern 60 min bei 400 mbar im Vakuumtrockenschrank evakuiert. Das Einfüllen der niedrigviskosen polymerisierbaren Zusammensetzungen erfolgte in üblicher Weise, d.h. mithilfe eines Einfüllbeutels. Das Einfüllen der hochviskosen polymerisierbaren Zusammensetzungen erfolgte dagegen durch luftblasenfreies Ausgießen der polymerisierbaren Zusammensetzungen auf die Glasplatte, wobei das aufgeklebte Teflonband als äußere Barriere dient. Anschließend wird die mit der Stützplatte verstärkte PMMA-Folie seitlich am Rand der Solarglasplatte angesetzt und dann langsam nach unten abgesenkt. Durch anschließende Druckbeaufschlagung mit Federklammmern wird die restliche Lösung auseinander und aus der Kammer herausgepresst, so dass die Kammer danach vollständig und luftblasenfrei gefüllt ist.

Die thermische Polymerisation erfolgt analog in einem Trockenschrank innerhalb von 60 min bei 80 °C. Anschließend werden die Verbundscheiben mit Hilfe einer UV-Band-Anlage (UV-Durchlauftrockner, Hersteller Print Concept, 120Watt/cm, eisendotierter Quecksilberdampfstrahler) nachgehärtet (2 Durchläufe mit jeweils 3m/min, bei 90% Lampenleistung).

Tabelle 3: Verbundsysteme Solarglas mit PMMA Folie

| **Bezeichnung Verbundsystem** | **T** | **U** | **V** | **X** | **Y** | **Z** | **AA** | **AB** |
|---|---|---|---|---|---|---|---|---|
| Komponente a)<br>Degalan P26 [g] | 30,0 | 30,0 | 45,0 | 60,0 | 16,6 | 16,6 | 24,9 | 33,2 |
| Komponente c)<br>Acronal 4F [g] | 30,0 | - | - | - | 16,6 | - | - | - |
| Komponente b)<br>Butylacrylat [g] | 85,5 | 115,5 | 100,5 | 85,5 | 47,3 | 63,9 | 55,6 | 47,3 |
| Komponente d)<br>Glycidylmethacrylat [g] | 2,55 | 2,55 | 2,55 | 2,55 | 1,41 | 1,41 | 1,41 | 1,41 |
| Komponente e)<br>Hydrolysierte Silan-Lösung aus Beispiel 1 [g] | 1,95 | 1,95 | 1,95 | 1,95 | - | - | - | - |

(fortgesetzt)

| Bezeichnung Verbundsystem | T | U | V | X | Y | Z | AA | AB |
|---|---|---|---|---|---|---|---|---|
| Peroxycarbonsäureester [g] | 0,75 | 0,75 | 0,75 | 0,75 | 0,42 | 0,42 | 0,42 | 0,42 |
| Lucirin TPO [g] | 0,75 | 0,75 | 0,75 | 0,75 | 0,42 | 0,42 | 0,42 | 0,42 |
| **Gesamtansatz [g]** | 151,5 | 151,5 | 151,5 | 151,5 | 82,8 | 82,8 | 82,8 | 82,8 |

Die erhaltenen Verbundscheiben zeigten sehr gute anwendungstechnische Eigenschaften, so wie in den Vorbespielen.

**7. Herstellung von Klebefolien und damit hergestellten Glas-Polymerverbunden**

Es erfolgt die Herstellung von Polymerfolien (Klebefolien) auf Basis von Polyisobutylmethacrylat (Degalan P26) mit 0,5 % Bis-(4-tert.-Butylcyclohexyl)-peroxydicarbonat als Initiator, unter Zusatz von 2-Ethylhexylthioglycolat als Molekulargewichtsregler, zwischen PET-Folie und äußeren Aluminiumträgerplatten.

Dazu werden Polyisobutylmethacrylat-Lösungen verschiedener Monomer-Zusammensetzung (siehe Tabelle 4) zwischen PET-Folien zu Klebefolien polymerisiert. Anschließend werden Verbundgläser aus Dünnglas (1 mm) mit den zuvor hergestellten Klebefolien (DIN A4-Format) und extrudierten PMMA-Platten (PLEXIGLAS 0A000, Dicke = 4mm) durch Pressen bei erhöhter Temperatur hergestellt. Die manuell zusammengesetzten Verbundscheiben werden dazu nach eine Aufheizzeit von 30min mithilfe einer vorgeheizten Presse unter Druckbeaufschlagung (25kN bis 100 kN) bei 100°C (Dauer 5min) verpresst.

Präparative Herstellung der Klebefolien:

In einer Kammer aus zwei PET-Folien (Abmessung = 600mm x 450mm) mit einer 1,5 mm dicken Distanzschnur aus Teflon (Abstandhalter) und zwei äußeren Trägerplatten aus Aluminium (Abmessung ca. 600mm x 450mm) polymerisiert man ca. 250g der polymerisierbaren Zusammensetzungen gemäß Tabelle 4 60 min im Trockenschrank bei 80°C. Die Lösung wurde zuvor zwecks Entfernung der Luftblasen 60 min bei 400 mbar im Vakuumtrockenschrank evakuiert.

Enthält die polymerisierbare Zusammensetzung außer dem thermischen Initiator noch den Photoinitiator so wird anschließend durch Photochemische Härtung im UV-Trockner der Fa. Print Concept bei 2 m/min endpolymerisiert. (3 Durchläufe mit 2m/min + 3 Durchläufe mit 3m/min).

**Verpressen der Glas-Polymer-Laminate**

Die manuell zusammengesetzten Verbundscheiben werden nach eine Aufheizzeit von 30min mithilfe einer vorgeheizten Presse unter Druckbeaufschlagung (25kN bis 100 kN) bei 100°C (Dauer 5min) verpresst.

Tabelle 4

| lfd. Nr. | Zusammensetzung der Klebe Folie | Regle [%} | Zeit [min] | Temp [°C] | Druck [kN] |
|---|---|---|---|---|---|
| 7.1 | Polyisobutylmethacrylat (Komponente a) / Butylacrylat (Komponente b) = 50 / 50 | 0,50 | 5 | 100 | 25 |
| 7.2 | Polyisobutylmethacrylat (Komponente a) / Butylacrylat (Komponente b)= 50 / 50 | 0,05 | 5 | 100 | 100 |
| 7.3 | Polyisobutylmethacrylat (Komponente a) / Butylacrylat (Komponente b)= 30 / 70 | 0,05 | 5 | 100 | 25 |
| 7.4 | Polyisobutylmethacrylat (Komponente a) / Butylacrylat (Komponente b) / Methacrylsäure (Komponente d) = 40/59/1 | 0,10 | 5 | 100 | 50 |
| 7.5 | Polyisobutylmethacrylat (Komponente a) / Butylacrylat (Komponente b) / Methacrylsäure (Komponente d) = 40/58/2 | 0,10 | 5 | 100 | 50 |

(fortgesetzt)

| lfd. Nr. | Zusammensetzung der Klebe Folie | Regle [%} | Zeit [min] | Temp [°C] | Druck [kN] |
|---|---|---|---|---|---|
| 7.6 | Polyisobutylmethacrylat (Komponente a) / Butylacrylat (Komponente b) / Methacrylsäure (Komponente d) = 40/59/1 | 0,25 | 5 | 100 | 25 |
| 7.7 | Polyisobutylmethacrylat (Komponente a) / Butylacrylat (Komponente b) = 50 / 50 | 0,25 | 5 | 100 | 25 |
| 7.8 | Polyisobutylmethacrylat (Komponente a) / Butylacrylat (Komponente b) / Komponente d*) /Komponente e*)= 50/47/1,7/1,3 | 0,75 | 5 | 100 | 25 |
| Vergl. Bsp. | handelsübliche zweiseitige Klebefolie Poly-2-Ethylhexylacrylat-Copolymer | vernetzt | 5 | 20 | 100 |
| 7.9 | P-i-BMA-MAS-Copol. (99/1) (Komponente a) / Butylacrylat (Komponente b) /Methacrylsäure (Komponente (d) = 40/59,4/0,6 | 0,25 | 5 | 100 | 50 |
| 7.10 | P-i-BMA-MAS-Copol. (98/2) (Komponente a) / Butylacrylat (Komponente b) / Methacrylsäure (Kompoinente c) = 40/58,8/1,2 | 0,25 | 5 | 100 | 75 |
| Komp. d*: Glycidylmethacrylat<br>Komp. e*:<br>Methacryloyloxypropyltrimethoxysilan<br>Regler = Ethylhexylthioglycolat<br>P-i-BMA-MAS-Copol. = Copolymer aus<br>Isobutylmethacrylat und Methacrylsäure | | | | | |

Das in den Beispielen eingesetzte Polybutylacrylat war Acronal 4F der Fa. BASF. Es handelt sich hierbei um ein lösungsmittelfreies Polybutylacrylat-Polymer mit niedrigem Molekulargewicht, welches laut technischem Datenblatt eine Glasübergangstemperatur von - 40°C aufweist. Das Molekulargewicht wurde zu 21.000 g/mol bestimmt. Es könnten aber auch andere Polybutylacrylate eingesetzt werden.

Als Komponente a) wurde Degalan P26 der Fa. Evonik Industries eingesetzt. Laut Produktdatenlatt des Degalan P26 (21.03.2011) handelt es sich hierbei um ein methacrylatbasiertes Perlprodukt auf Basis von Iso-Butylmethacrylat mit einer Glasübergangstemperatur von 66°C nach DIN EN ISO 11357-1. Die Viskositätszahl nach DIN EN ISO 1628-1 wird mit 55cm$^3$/g, das Molekulargewicht Mw nach DIN 55672-1 mit 180.000g/mol angegeben.

**Beispiel 8: Herstellungsmöglichkeiten der Polymerkomponente a)**

In einigen Beispielen wurden als Komponente a) Copolymere aus Isobutylmethacrylat und Methacrylsäure eingesetzt. Diese wurden durch Suspensionspolymerisation wie unten beschrieben in Form von Perlpolymerisaten erhalten.

Neben dem Einbau von haftungsvermittelnden Comonomeren wie zum Beispiel Methacrylsäure kann auch das Molekulargewicht der Polymerkomponente a) in den Klebefolien über die Reglermenge variiert werden, was sich wiederum auf die resultierende Viskosität der anschließend herzustellenden Monomer-Polymer-Lösung auswirkt.

Darüber hinaus hat sich gezeigt, dass durch vorhergehende Scherung der Monomer-Wasser-Dispersion bei der Suspensionspolymerisation mit Hilfe eines Ultra-Turrax oder Inline-Scheraggregat (Verweis ggf. auf 200520023 und/oder 200520035) nach erfolgter Polymerisation feinere Polymerpartikel erhalten werden, die je nach Molekulargewicht zu einer verkürzten Lösezeit führen sollten.

**Beispiel 8.1 -Variation des Molekulargewichtes über Reglermenge:**

Unter Verwendung eines Pickering-Stabilisators $Al(OH)_3$ in Kombination mit den Hilfsverteilern Natrium-Paraffinsulfonat und Polyethylenglycol mit einem Molekulargewicht Mw von ca. 5000g/mol wird durch Variation der Reglermenge an 2-Ethylhexylthioglykolat das Molekulargewicht variiert. Die Angabe der Reglermenge erfolgt bezogen auf

die Menge an eingesetztem Monomer. Während das Standard-Verkaufsprodukt Degalan P26 eine Viskositätszahl von $55cm^3/g$ aufweist, können durch Variation der Reglermenge ebenfalls Viskositätszahlen von 67 oder $33cm^3/g$ eingestellt werden. Die resultierende volumenmittlere Partikelgröße d50 (Bezeichnung auch D[v,0,5] *volume median Diameter,* D50 oder D0,5) wird durch Partikelgrößenbestimmung an einem Mastersizer 2000 der Fa. Malvern bestimmt.

Tabelle 5:

| Beispiel | Regler % bez. auf. Monomer (2-Ethylhexylthioglykolat) | Viskositätzahl [$cm^3/g$] | Restmonomergehalt an Isobutyl methacry at [%] | Partikelgröße V50 [$\mu$m] |
|---|---|---|---|---|
| 8.1A | 0,22 | 55,4 | 0,34 | 146 |
| 8.1B | 0,15 | 66,9 | 0,49 | 147 |
| 8.1C | 0,5 | 32,6 | 0,33 | 156 |

Ausführlich wird hier das Beispiel 8.1C beschrieben:

In eine 2L Rundkolben-Apparatur mit Dreieckrührer, Thermoelement, Rückflußkühler mit Wasserbad werden 956,0 g Wasser und 10,0g $Al_2(SO_4)_3x14H_2O$ unter Rühren und Stickstoffüberleitung vorgelegt. Mittels Wasserbad wird auf 80 °C aufgeheizt. Die Rührgeschwindigkeit beträgt 600 Upm = 113m/min (d = 0,10m). Bei Erreichen der vorgegebenen Innentemperatur von 80°C wird die Sodalösung (44,0 g 10%ige Sodalösung, entsprechend der 4,4fachen Menge des Alusulfates) zur Fällung des Aluminiumtrihydroxides hinzugegeben. Anschließend erfolgt die Zugabe der Hilfsverteiler Natrium-Paraffinsulfonat und Polyethylenglycol jeweils als 1 %ige Lösung (0,10 g Natrium-Paraffinsulfonat und 0,10 g Polyethylenglykol Mw ca. 5000 g/mol). Der pH-Wert der Wasserphase beträgt 5,5. Danach wird die Monomerenphase bestehend aus 500g Isobutylmethacrylat enthaltend 2,5 g Lauroylperoxid und 2,5 g 2-Ethylhexylthioglykolat zugegeben (Wasser zu Monomeren-Verhältnis 2:1). Innerhalb von 82 min steigt die Innentemperatur von 80 °C auf 83,8 °C an. Nach dem Temperaturmaximum wird noch 1h bei 90 °C zur Reduktion von Restmonomeren nacherhitzt. Anschließend wird auf 40 °C abgekühlt und mit 10 mL 50 %iger Schwefelsäure abgesäuert. Der Ansatz wird weiter abgekühlt, auf eine Porzellannutsche mit Tuchfilter abgelassen und mit 10 L destilliertem Wasser gewaschen. Das Perl-Produkt wird etwa 20 h bei 35 °C getrocknet (Hordentrocknung). Es werden 466 g Perlprodukt erhalten und kann zur Herstellung der Klebefolien verwendet werden.

**Beispiel 8.2 - Einbau von Komponente d) als eine haftungsvermittelnde Gruppe in Komponente a):**

Unter Verwendung einer Reglermenge von 0,25 Gew.-% an 2-Ethylhexylthioglykolat bezogen auf die Gesamtmonomermenge können Perlpolymerisate aufweisend haftungvermittelnde Gruppen in Form von Carbonsäure-Gruppen eingesetzt werden. Mit zunehmendem Gehalt an Methacrylsäure in der Monomermischung wird vom in-situ erzeugten Pickering-Stabilisator $Al(OH)_3$ auf einen Polyacrylsäureverteiler gewechselt, Handelsname des Produktes von Evonik Industries Degapas 8105S, Mw = 400 000g/mol. Das vorliegende Verhältnis von Wasser zu Monomerenphase beträgt hier 3:1.

**Tabelle 6:**

| Beispiel | Gehalt an Isobutylmethacrylat in Monomernschung [Gew-%] | Gehalt an Methacylsäure in Monomermischung [Gew-%] | Verteiler-Menge in Gew.-% bez. auf GesamtMonomermenge |
|---|---|---|---|
| 8.2A | 99 | 1 | 4,0 $Al_2(SO_4)_3x14H_2O$ |
| 8.2B | 98 | 2 | 0,7 Degapas 8105 S |
| 8.2C | 97 | 3 | 0,7 Degapas 8105 S |
| 8.2D | 96 | 4 | 0,7 Degapas 8105 S |

Ausführlich wird hier das Beispiel 8.2D beschrieben:

In eine 2 L Rundkolben-Apparatur mit Dreieckrührer, Thermoelement, Rückflußkühler mit Wasserbad werden 1050,0 g Wasser, 2,45 g Degapas 8105S entsprechend 0,7 Gew.-% bezogen auf die Gesamtmonomermenge sowie 0,07 g $KHSO_4$ (0,02 Gew.-% bezogen auf die Gesamtmonomerenmenge) und 0,105 g $MgSO_4$ (0,03 Gew.-% bezogen auf de Gesamtmonomerenmenge) unter Rühren und Stickstoffüberleitung vorgelegt. Mittels Wasserbad wird auf 80 °C aufgeheizt. Die Rührgeschwindigkeit beträgt 600 Upm = 113 m/min (d = 0,06m). Bei Erreichen der vorgegebenen Innentemperatur von 80 °C wird die Monomerlösung bestehend aus 336,0 g Isobutylmethacrylat, 14,0 g Methacrylsäure, 1,75 g Lauroylperoxid und 0,88 g 2-Ethylhexylthioglykolat zugegeben (Wasser zu Monomeren-Verhältnis 3:1). Innerhalb

von 70 min steigt die Innentemperatur von 80 °C auf 84,7 °C an. Nach dem Temperaturmaximum wird 1 h bei 85 °C zur Reduktion von Restmonomeren nacherhitzt. Anschließend wird auf 30 °C abgekühlt. Der Ansatz wird zuerst über ein Drahtsieb filtriert, danach wird das Produkt auf einen Porzellannutsche mit Filtertuch und mit 5 L entionisiertem Wasser gewaschen. Das Perl-Produkt wird etwa 20 h bei 35 °C getrocknet (Hordentrocknung). Es werden 330g Perlprodukt erhalten.

**Beispiel 8.3 - Verringerung der Partikelgröße:**

Unter Scherung der Monomer-Wasser-Dispersion mit Hilfe eines Ultra-Turrax vor der Polymerisation ist die Erzeugung feiner Monomertröpfchen möglich, die durch den Verteiler $Al(OH)_3$ stabilisiert werden. Bei der anschließenden Polymerisation werden Polyisobutylmethacrylat-Partikel erhalten, die eine gewichtsgemittelte Partikelgröße V50 von 97$\mu$m bei einer Viskositätszahl von 48 $cm^3/g$ aufweisen (im Vergleich zu den Perlgrößen V50 = 146-156$\mu$m in Beispiel 8.1, die deutlich größer sind). Es ist somit auch möglich feinere Partikelgrößen zu erzeugen, die bei der Herstellung der Monomer-Polymerlösungen bezüglich des Faktors Zeit von Vorteil sind, da diese schneller benetzt werden.

In einen 1 L Schmizo-Reaktor mit Blattrührer, Thermoelement, Rückflußkühler mit Wasserbad werden 478,0g Wasser und 5,0 g $Al_2(SO_4)_3x14H_2O$ unter Rühren und Stickstoffüberleitung vorgelegt. Die Rührgeschwindigkeit beträgt 600 Upm= 113m/min (d = 0,10 m). Bei Erreichen der vorgegebenen Innentemperatur von 80 °C wird die Sodalösung (22,0 g 10%ige Sodalösung, entsprechend der 4,4fachen Menge des Alusulfates) zur Fällung des Aluminiumtrihydroxides hinzugegeben. Anschließend erfolgt die Zugabe der Hilfsverteiler Natrium-Paraffinsulfonat und Polyethylenglycol jeweils als 1 %ige Lösung (0,05 g Natrium-Paraffinsulfonat und 0,05g Polyethylengylkol Mw ca. 5000 g/mol). Der pH-Wert der Wasserphase beträgt 5,3. Danach wird die Monomerenphase bestehend aus 250 g Isobutylmethacrylat enthaltend 1,25 g Lauroylperoxid und 0,63 g 2-Ethylhexylthioglykolat zugegeben (Wasser zu Monomeren-Verhältnis 2:1). Der Reaktorinhalt wird mit einem Ultra-Turrax der Fa. Ika T50 mit Scherwerkzeug S50-N-G45-MF für 10min bei 7000 Upm geschert. Innerhalb von 120min steigt die Innentemperatur von 76 °C auf 80 °C an. Nach dem Temperaturmaximum wird noch 1 h bei 90 °C zur Reduktion von Restmonomeren nacherhitzt. Anschließend wird auf 40 °C abgekühlt und mit 10 mL 50 %iger Schwefelsäure abgesäuert. Der Ansatz wird weiter abgekühlt, auf eine Porzellannutsche mit Tuchfilter abgelassen und mit 10 L destilliertem Wasser gewaschen. Das Perl-Produkt wird etwa 20 h bei 35 °C getrocknet (Hordentrocknung). Es werden 225 g Perlprodukt erhalten.

## Patentansprüche

1. Klebstoffzusammensetzung zur Herstellung von Verbundkörpern, bevorzugt zur Verklebung von Kunststoff- und Glaskörpern, besonders bevorzugt zur Herstellung von Klebeschichten in Kunststoff/Glas Verbundgläsern, umfassend

   a) 10 bis 60 Gew. % Polyisobutylmethacrylat oder Isobutylmethacrylat oder eine Mischung davon
   b) 0 bis 80 Gew. % Butylacrylat
   c) 0 bis 50 Gew. % Polybutylacrylat
   d) 0 bis 5 Gew. % mindestens eines (Meth)acrylates der Formel (I)

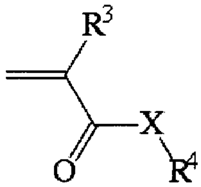

(I)

   wobei X = O oder N, $R^3$ ein Wasserstoffatom oder eine Methylgruppe ist und $R^4$ einen aliphatischen oder cycloaliphatischen Rest mit 1 bis 20 Kohlenstoffatomen bezeichnet, der mindestens eine Hydroxyl-, Thiol-, primäre Amino-, sekundäre Amino-, und/oder eine Epoxygruppe aufweist,
   e) 0 bis 5 Gew. % mindestens einer Silizium-Verbindung erhältlich durch Umsetzung von 0 bis 5 Gewichtsteilen mindestens einer Silizium-Verbindung der Formel (II):

$$Si_mR^1_nR^2_oO_rX_s \qquad (II)$$

wobei $R^1$ jeweils unabhängig voneinander einen Alkenyl- oder Cycloalkenylrest mit 2 bis 12 Kohlenstoffatomen bezeichnet, der eine oder mehrere Estergruppen aufweisen kann,
$R^2$ jeweils unabhängig voneinander einen Alkyl- oder Cycloalkylrest mit 1 bis 12 Kohlenstoffatomen kennzeichnet,
X jeweils unabhängig voneinander ein Halogenatom oder eine Alkoxygruppe mit 1 bis 6 Kohlenstoffatomen darstellt,
m eine ganze Zahl größer gleich 1 ist,
n eine ganze Zahl zwischen 1 und 2*m+1 ist,
o eine ganze Zahl zwischen 0 und 2*m ist,
r eine ganze Zahl zwischen 0 und m-1 ist,
s eine ganze Zahl zwischen 1 und 2*m+1 ist, und
wobei m, n, o und s der Beziehung (1) genügen:

$$n + o + s = 2*m + 2 \qquad (1)$$

mit 0,01 bis 2 Gewichtsteilen Wasser und 0 bis 4,0 Gewichtsteilen mindestens einer Säure,
wobei die Komponenten a) bis e) in Summe 100 Gew. % ergeben und b) und c) in Summe in einer Menge von 30 bis 90 Gew. %, bezogen auf die Summe der Komponenten a) bis e), eingesetzt wird,
und wobei die Klebstoffzusammensetzung noch 0,1 bis 6 Gew. %, bevorzugt 0,1 bis 5 Gew. % und besonders bevorzugt 0,2 bis 4 Gew. % bezogen auf das Gesamtgewicht der Klebstoffzusammensetzung, weitere - von den Komponenten a) bis e) verschiedene -Additive enthalten kann.

**2.** Klebstoffzusammensetzung nach Anspruch 1,
**dadurch gekennzeichnet,**
**dass** sie mindestens 10 Gew. %, bezogen auf die Summe der Komponenten a) bis e), an polymeren Bestandteilen enthält, bevorzugt, dass sie 10 bis 70 Gew %, besonders bevorzugt 20 bis 60 Gew. %, jeweils bezogen auf die Summe der Komponenten a) bis e), an polymeren Bestandteilen und entsprechend 90 bis 30 Gew %, besonders bevorzugt 80 bis 20 Gew. %, jeweils bezogen auf die Summe der Komponenten a) bis e), an monomeren Bestandteilen enthält

**3.** Klebstoffzusammensetzung nach Anspruch 1 oder 2,
**dadurch gekennzeichnet,**
**dass** die Komponenten a), b) und d) zumindest teilweise als Copolymer aus a) und d) und/oder b) und d)vorliegen.

**4.** Klebstoffzusammensetzung nach einem der Ansprüche 1 bis 3,
**dadurch gekennzeichnet,**
**dass** als Polymerisationsinitiatoren

- zumindest ein thermischer Initiator, bevorzugt ausgewählt aus der Gruppe bestehend aus tert.-Amylperoxyneodecanoat, tert.-Amylperoxypivalat, tert.-Butylperoxypivalat, tert.-Amylperoxy-2-ethylhexanoat, tert.-Butylperoxy-2-ethylhexanoat, tert.-Amylperoxy-3,5,5,-trimethylhexanoat, Ethyl-3,3-di-(tert.-amylperoxy)-butyrate, tert.-Butylperbenzoat, tert.-Butylhydroperoxid, Decanoylperoxid, Laurylperoxid, Dibenzoylperoxid, Bis(4-tert.-Butylcyclohexyl)peroxydicarbonat, tert.-Butylperoxyneodecanoat, tert.-Butylperoxy-3,5,5,-trimethylhexanoat,

und/oder

- zumindest ein Photoinitiator, bevorzugt ausgewählt aus der Gruppe bestehend aus Benzophenon, $\alpha,\alpha$-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Ethyl - 2,4,6 - Trimethylbenzoylphenylphosphinate Bisacylphosphinoxid enthalten sind.

**5.** Klebstoffzusammensetzung nach einem der Ansprüche 1 bis 4,

**dadurch gekennzeichnet,**

**dass** sie die Komponenten a) bis e) in den nachfolgend genannten Mengen umfasst bzw. nicht umfasst

a) 20 bis 50 Gew. %, bevorzugt 20 bis 40 Gew. % Polyisobutylmethacrylat oder Isobutylmethacrylat oder einem Gemisch davon
b) 44 bis 79 Gew. % Butylacrylat
c) 0 Gew. % Polybutylacrylat, d.h. es ist kein Polybutylacrylat enthalten
d) 0,5 bis 3 Gew. %, bevorzugt 1 bis 2 Gew. %, (Meth)acrylat oder epoxyfunktionelles (Meth)acrylat, bevorzugt Glycidylmethacrylat
e) 0,5 bis 3 Gew. %, bevorzugt 1 bis 2 Gew. % vinylische bzw. (meth)acrylsubstituierte Trialkoxysilane, bevorzugt Gamma-Methacryloyloxypropyltrimethoxysilan

oder
**dass** sie die Komponenten a) bis e) in den nachfolgend genannten Mengen umfasst

a) 20 bis 50 Gew. %, bevorzugt 20 bis 40 Gew. % Polyisobutylmethacrylat oder Isobutylmethacrylat oder einem Gemisch davon
b) 24 bis 79 Gew. % Butylacrylat
c) 5 bis 50 Gew. %, bevorzugt 5 bis 30 Gew. %, Polybutylacrylat
d) 0,5 bis 3 Gew. %, bevorzugt 1 bis 2 Gew. %, (Meth)acrylat oder epoxyfunktionelles (Meth)acrylat, bevorzugt Glycidylmethacrylat
e) 0,5 bis 3 Gew. %, bevorzugt 1 bis 2 Gew. % vinylische bzw. (meth)acrylsubstituierte Trialkoxysilane, bevorzugt Gamma-Methacryloyloxypropyltrimethoxysilan

oder
**dass** sie die Komponenten a) und b) in den nachfolgend genannten Mengen umfasst, die Komponenten c), d) und e) jedoch nicht enthalten sind

a) 20 bis 50 Gew. %, bevorzugt 20 bis 40 Gew. % Polyisobutylmethacrylat oder Isobutylmethacrylat oder ein Gemisch davon
b) 50 bis 80 Gew. % Butylacrylat

oder
**dass** sie die Komponenten a) bis c) in den nachfolgend genannten Mengen umfasst, die Komponenten d) und e) jedoch nicht enthalten sind

a) 20 bis 50 Gew. %, bevorzugt 20 bis 40 Gew. % Polyisobutylmethacrylat oder Isobutylmethacrylat oder ein Gemisch davon
b) 30 bis 75 Gew. % Butylacrylat
c) 5 bis 50 Gew. %, bevorzugt 5 bis 30 Gew. % Polybutylacrylat,

wobei in den zuvor beanspruchten alternativen Ausführungsformen die Summe der von den Komponenten a) bis e) enthaltenen Komponenten 100 Gew. % beträgt.

6. Verfahren zur Herstellung von Verbundkörpern, bevorzugt Glas/Kunststoff Verbundgläsern,
**dadurch gekennzeichnet,**
**dass** die Klebstoffzusammensetzung nach einem der Ansprüche 1 bis 4 geschmolzen und die zu verklebenden Körper durch Schmelzkleben miteinander verbunden werden.

7. Verfahren zur Herstellung von Verbundkörpern
**dadurch gekennzeichnet,**
**dass** zwischen einem 1. Körper, bevorzugt aus Glas, besonders bevorzugt einer Glasplatte und einem 2. Körper, bevorzugt aus Kunststoff, besonders bevorzugt einer Kunststoffplatte, ein Hohlraum gebildet wird, dieser Hohlraum, bevorzugt mit einem Abstand der Glas- von der Kunststoffplatte von 0,01 bis 5 mm, bevorzugt 0,1 bis 3mm und besonders bevorzugt 0,1 bis 2 mm,

entweder mit einer Klebstoffzusammensetzung nach einem der Ansprüche 1 bis 5 in geschmolzener Form gefüllt und dann eine Klebeschicht erzeugt wird
oder mit einer Klebstoffzusammensetzung nach einem der Ansprüche 1 bis 5, in Form einer polymerisierbaren Zusammensetzung gefüllt und dann die polymerisierbare Zusammensetzung polymerisiert wird.

**8.** Verfahren nach Anspruch 7,
**dadurch gekennzeichnet,**
**dass** zunächst eine thermische Härtung der polymerisierbaren Zusammensetzung, bevorzugt bei 70 bis 110°C für 30 bis 90 min und anschließend eine Härtung mittels UV-Strahlung, bevorzugt bei 20 bis 80°Cdurchgeführt wird.

**9.** Verfahren zur Herstellung von Verbundkörpern,
**dadurch gekennzeichnet,**
**dass** aus einer Klebstoffzusammensetzung nach einem der Ansprüche 1 bis 5 eine Polymerfolie, bevorzugt mit einer Dicke von 0,01 bis 5 mm, bevorzugt 0,1 bis 3 mm und besonders bevorzugt 0,1 bis 2 mm, hergestellt, diese zwischen einen 1. Körper, bevorzugt einen Glaskörper, besonders bevorzugt eine Glasplatte, und einen 2. Körper, bevorzugt einen Kunststoffkörper, besonders bevorzugt eine Kunststoffplatte, gelegt und dann unter Einwirkung von Druck und Temperatur laminiert wird.

**10.** Verfahren nach Anspruch 9,
**dadurch gekennzeichnet, dass**
während der Lamination die Temperatur im Bereich von 60 bis 120°C und / oder der Druck im Bereich von 10 bis 150 kN gehalten wird und/oder die Presszeit 1 bis 100 Minuten beträgt.

**11.** Verfahren nach Anspruch 9 oder 10,
**dadurch gekennzeichnet,**
**dass** zur Herstellung der Polymerfolie die Klebstoffzusammensetzung in Form einer polymerisierbaren Zusammensetzung verwendet wird und zunächst eine thermische Härtung der polymerisierbaren Zusammensetzung, bevorzugt bei 60 bis 110°C für 30 bis 90 min und anschließend eine Härtung mittels UV-Strahlung, bevorzugt bei 20 bis 80°C durchgeführt wird.

**12.** Polymerfolie, bevorzugt mit einer Dicke von 0,01 bis 5 mm, besonders bevorzugt 0,1 bis 3 mm, ganz besonders bevorzugt 0,1 bis 2 mm, erhältlich aus einer Klebstoffzusammensetzung nach einem der Ansprüche 1 bis 5, bevorzugt dadurch, dass die Klebstoffzusammensetzung in Form einer polymerisierbaren Zusammensetzung vorliegt und durch Polymerisation gehärtet wird.

**13.** Verbundkörper, umfassend mindestens eine Klebeschicht aus einer Klebstoffzusammensetzung nach einem der Ansprüche 1 bis 5 oder eine Klebefolie nach Anspruch 12.

**14.** Verbundkörper nach Anspruch 13,
**dadurch gekennzeichnet, dass** er

- mindestens einen Kunststoffkörper, bevorzugt eine Kunststoffplatte, besonders bevorzugt mit einer Dicke von 0,5 bis 8 mm, und ganz besonders bevorzugt bestehend aus einem Homo- oder Copolymer oder aus einem Polymerblend von Poly(meth)acrylaten
- mindestens zwei weitere Körper, bevorzugt mindestens zwei Glasscheiben, bevorzugt mit einer Dicke von 0,01 bis 2 mm, und ganz besonders bevorzugt bestehend aus Kalk-Natronglas oder eisenarmem Weißglas oder chemisch vorgespanntem Glas,
- jeweils zwischen dem Kunststoffkörper und den Glasscheiben eine Klebeschicht aus einer Klebstoffzusammensetzung nach einem der Ansprüche 1 bis 5 oder einer Klebefolie nach Anspruch 12

umfasst.

**15.** Verbundkörper nach Anspruch 13,
**dadurch gekennzeichnet, dass**
er eine im Verhältnis zur ebenfalls verwendeten Polymerfolie dickere Glasscheibe, bevorzugt 2 bis 8 mm, besonders bevorzugt 3 bis 6 mm, als Träger und eine mittels erfindungsgemäßem Kleber befestigte, bevorzugt strukturierte, Polymerfolie, besonders bevorzugt eine Folie mit Fresnelstrukturen umfasst.

## Claims

**1.** Adhesive composition for producing composite elements, preferably for bonding plastics elements and glass elements, more preferably for producing adhesive layers in plastic/glass composite glazing, comprising

a) 10 to 60 wt.% of polyisobutyl methacrylate or isobutyl methacrylate or a mixture thereof
b) 0 to 80 wt.% of butyl acrylate
c) 0 to 50 wt.% of polybutyl acrylate
d) 0 to 5 wt.% of at least one (meth) acrylate of the formula (I)

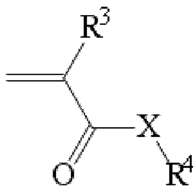 (I)

where X = O or N, $R^3$ is a hydrogen atom or a methyl group and $R^4$ denotes an aliphatic or cycloaliphatic radical having 1 to 20 carbon atoms that has at least one hydroxyl group, thiol group, primary amino group, secondary amino group, and/or an epoxy group,
e) 0 to 5 wt.% of at least one silicon compound obtainable by reacting 0 to 5 parts by weight of at least one silicon compound of the formula (II) :

$$Si_mR^1_nR^2_oO_rX_s \qquad (II)$$

where $R^1$ independently at each occurrence denotes an alkenyl or cycloalkenyl radical having 2 to 12 carbon atoms that may have one or more ester groups,
$R^2$ independently at each occurrence denotes an alkyl or cycloalkyl radical having 1 to 12 carbon atoms,
X independently at each occurrence represents a halogen atom or an alkoxy group having 1 to 6 carbon atoms,
m is an integer greater than or equal to 1,
n is an integer between 1 and 2*m+1,
o is an integer between 0 and 2*m,
r is an integer between 0 and m-1,
s is an integer between 1 and 2*m+1, and
where m, n, o and s satisfy the relation (1):

$$n + o + s = 2*m + 2 \qquad (1)$$

with 0.01 to 2 parts by weight of water and 0 to 4.0 parts by weight of at least one acid, where the components a) to e) are in total 100 wt.% and b) and c) are used in total in an amount of 30 to 90 wt.%, based on the sum total of the components a) to e),
and where the adhesive composition may further comprise 0.1 to 6 wt.%, preferably 0.1 to 5 wt.% and more preferably 0.2 to 4 wt.%, based on the total weight of the adhesive composition, of further additives, different from the components a) to e).

**2.** Adhesive composition according to Claim 1, **characterized in that** it comprises at least 10 wt.%, based on the sum total of the components a) to e), of polymeric constituents, preferably in that it comprises 10 to 70 wt.%, more preferably 20 to 60 wt.%, based in each case on the sum total of the components a) to e), of polymeric constituents and, correspondingly, 90 to 30 wt.%, more preferably 80 to 20 wt.%, based in each case on the sum total of the components a) to e), of monomeric constituents.

**3.** Adhesive composition according to Claim 1 or 2, **characterized in that** the components a), b) and d) are present at least partly in the form of copolymer of a) and d) and/or b) and d).

4. Adhesive composition according to any of Claims 1 to 3, **characterized** **in that** polymerization initiators included are

- at least one thermal initiator, preferably selected from the group consisting of tert-amyl peroxyneodecanoate, tert-amyl peroxypivalate, tert-butyl peroxypivalate, tert-amyl peroxy-2-ethylhexanoate, tert-butyl peroxy-2-ethylhexanoate, tert-amyl peroxy-3,5,5-trimethylhexanoate, ethyl 3,3-di(tert-amyl peroxy)butyrate, tert-butyl perbenzoate, tert-butyl hydroperoxide, decanoyl peroxide, lauryl peroxide, dibenzoyl peroxide, bis(4-tert-butylcyclohexyl) peroxydicarbonate, tert-butyl peroxyneodecanoate and tert-butyl peroxy-3,5,5-trimethylhexanoate, and/or
- at least one photoinitiator, preferably selected from the group consisting of benzophenone, $\alpha,\alpha$-diethoxyacetophenone, 4,4-diethylaminobenzophenone, 2,2-dimethoxy-2-phenylacetophenone, 4-isopropylphenyl 2-hydroxy-2-propyl ketone, 1-hydroxycyclohexyl phenyl ketone, isoamyl p-dimethylaminobenzoate, methyl 4-dimethylaminobenzoate, methyl o-benzoylbenzoate, benzoin, benzoin ethyl ether, benzoin isopropyl ether, benzoin isobutyl ether, 2-hydroxy-2-methyl 1-phenylpropan-1-one, 2-isopropylthioxanthone, dibenzosuberone, 2,4,6-trimethylbenzoyldiphenylphosphine oxide, ethyl 2,4,6-trimethylbenzoylphenylphosphinate and bisacylphosphine oxide.

5. Adhesive composition according to any of Claims 1 to 4, **characterized** **in that** it comprises or does not comprise the components a) to e) in the amounts stated below:

a) 20 to 50 wt.%, preferably 20 to 40 wt.%, of polyisobutyl methacrylate or isobutyl methacrylate or a mixture thereof
b) 44 to 79 wt.% of butyl acrylate
c) 0 wt.% of polybutyl acrylate, i.e. there is no polybutyl acrylate present
d) 0.5 to 3 wt.%, preferably 1 to 2 wt.%, of (meth)acrylate or epoxy-functional (meth)acrylate, preferably glycidyl methacrylate
e) 0.5 to 3 wt.%, preferably 1 to 2 wt.%, of vinylic and/or (meth)acryloyl-substituted trialkoxysilanes, preferably gamma-methacryloyloxypropyltrimethoxysilane

or
**in that** it comprises the components a) to e) in the amounts specified below:

a) 20 to 50 wt.%, preferably 20 to 40 wt.% of polyisobutyl methacrylate or isobutyl methacrylate or a mixture thereof
b) 24 to 79 wt.% of butyl acrylate
c) 5 to 50 wt.%, preferably 5 to 30 wt.%, of polybutyl acrylate
d) 0.5 to 3 wt.%, preferably 1 to 2 wt.%, of (meth)acrylate or epoxy-functional (meth)acrylate, preferably glycidyl methacrylate
e) 0.5 to 3 wt.%, preferably 1 to 2 wt.%, of vinylic and/or (meth)acryloyl-substituted trialkoxysilanes, preferably gamma-methacryloyloxypropyltrimethoxysilane

or
**in that** it comprises the components a) and b) in the amounts specified below, but the components c), d) and e) are not present:

a) 20 to 50 wt.%, preferably 20 to 40 wt.%, of polyisobutyl methacrylate or isobutyl methacrylate or a mixture thereof
b) 50 to 80 wt.% of butyl acrylate

or
**in that** it comprises the components a) to c) in the amounts specified below, but the components d) and e) are not present:

a) 20 to 50 wt.%, preferably 20 to 40 wt.%, of polyisobutyl methacrylate or isobutyl methacrylate or a mixture thereof
b) 30 to 75 wt.% of butyl acrylate

c) 5 to 50 wt.%, preferably 5 to 30 wt.%, of polybutyl acrylate,

where, in the alternative embodiments claimed above, the sum total of the components presentin the components a) to e), is 100 wt.%.

**6.** Method for producing composite elements, preferably glass/plastic composite glazing,
**characterized**
**in that** the adhesive composition according to any of Claims 1 to 4 is melted and the elements to be bonded are joined to one another by melt-bonding.

**7.** Method for producing composite elements,
**characterized**
**in that** between a 1st element, preferably of glass, more preferably a glass plate, and a 2nd element, preferably of plastic, more preferably a plastics plate, a cavity is formed, and this cavity, preferably with a distance of the glass plate from the plastics plate of 0.01 to 5 mm, preferably 0.1 to 3 mm and more preferably 0.1 to 2 mm,
either is filled with an adhesive composition according to any of Claims 1 to 5 in melted form and then an adhesive layer is produced
or is filled with an adhesive composition according to any of Claims 1 to 5 in the form of a polymerizable composition and then the polymerizable composition is polymerized.

**8.** Method according to Claim 7,
**characterized**
**in that** first of all the polymerizable composition is cured thermally, preferably at 70 to 110°C for 30 to 90 minutes, and then is cured by means of UV radiation, preferably at 20 to 80°C.

**9.** Method for producing composite elements,
**characterized**
**in that** a polymer sheet, preferably having a thickness of 0.01 to 5 mm, preferably 0.1 to 3 mm and more preferably 0.1 to 2 mm, is produced from an adhesive composition according to any of Claims 1 to 5, this sheet is placed between a 1st element, preferably a glass element, more preferably a glass plate, and a 2nd element, preferably a plastics element, more preferably a plastics plate, and then lamination is carried out with exposure to pressure and temperature.

**10.** Method according to Claim 9,
**characterized in that**
during the lamination the temperature is held in the range from 60 to 120°C and/or the pressure is held in the range from 10 to 150 kN and/or the pressing time is 1 to 100 minutes.

**11.** Method according to Claim 9 or 10,
**characterized**
**in that** the polymer sheet is produced using the adhesive composition in the form of a polymerizable composition, and the polymerizable composition is first cured thermally, preferably at 60 to 110°C for 30 to 90 minutes, and then is cured by means of UV radiation, preferably at 20 to 80°C.

**12.** Polymer sheet, preferably having a thickness of 0.01 to 5 mm, more preferably 0.1 to 3 mm, very preferably 0.1 to 2 mm, obtainable from an adhesive composition according to any of Claims 1 to 5, preferably such that the adhesive composition is present in the form of a polymerizable composition and is cured by polymerization.

**13.** Composite element comprising at least one adhesive layer composed of an adhesive composition according to any of Claims 1 to 5, or an adhesive sheet according to Claim 12.

**14.** Composite element according to Claim 13, **characterized in that** it comprises

- at least one plastics element, preferably a plastics plate, more preferably having a thickness of 0.5 to 8 mm, and very preferably consisting of a homopolymer or copolymer or of a polymer blend of poly(meth)acrylates,
- at least two further elements, preferably at least two glass panes, preferably having a thickness of 0.01 to 2 mm, and very preferably consisting of soda-lime glass or low-iron white glass or chemically prestressed glass,
- in each case between the plastics element and the glass panes, an adhesive layer composed of an adhesive

composition according to any of Claims 1 to 5 or of an adhesive sheet according to Claim 12.

**15.** Composite element according to Claim 13,
**characterized in that**
it comprises as support a glass pane which is thicker in relation to the polymer film that is likewise used, preferably 2 to 8 mm, more preferably 3 to 6 mm, and a polymer sheet which is fixed by means of adhesive of the invention, and is preferably structured, more preferably a sheet having Fresnel structures.

## Revendications

**1.** Composition d'adhésif pour la fabrication de corps composites, de préférence pour le collage de corps en matière plastique et verre, de façon particulièrement préférée pour la production de couches de colle dans des verres composites matière plastique/verre, comprenant

a) 10 à 60 % en poids de poly(méthacrylate d'isobutyle) ou de méthacrylate d'isobutyle ou d'un mélange de ceux-ci
b) 0 à 80 % en poids d'acrylate de butyle
c) 0 à 50 % en poids de poly(acrylate de butyle)
d) 0 à 5 % en poids d'au moins un (méth) acrylate de formule (I)

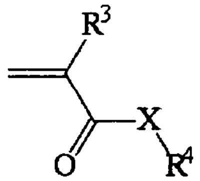

(I)

dans laquelle X = O ou N, $R^3$ est un atome d'hydrogène ou un groupe méthyle et $R^4$ représente un radical aliphatique ou cycloaliphatique ayant de 1 à 20 atomes de carbone, qui comporte au moins un groupe hydroxy, thiol, amino primaire, amino secondaire et/ou un groupe époxy,
e) 0 à 5 % en poids d'au moins un composé de silicium, pouvant être obtenu par mise en réaction de 0 à 5 parties en poids d'au moins un composé de silicium de formule (II):

$$\mathbf{Si_mR^1_nR^2_oO_rX_s} \qquad \text{(II)}$$

dans laquelle $R^1$ représente chaque fois indépendamment un radical alcényle ou cycloalcényle ayant de 2 à 12 atomes de carbone, qui peut comporter un ou plusieurs groupes ester,
$R^2$ représente chaque fois indépendamment un radical alkyle ou cycloalkyle ayant de 1 à 12 atomes de carbone,
X représente chaque fois indépendamment un atome d'halogène ou un groupe alcoxy ayant de 1 à 6 atomes de carbone,
m est un nombre entier supérieur ou égal à 1,
n est un nombre entier compris entre 1 et 2*m+1,
o est un nombre entier compris entre 0 et 2*m,
r est un nombre entier compris entre 0 et m-1,
s est un nombre entier compris entre 1 et 2*m+1, et
dans laquelle m, n, o et s satisfont à la relation (1)

$$n + o + s = 2*m + 2 \qquad (1)$$

avec 0,01 à 2 parties en poids d'eau et 0 à 4,0 parties en poids d'au moins un acide,

les composants a) à e) faisant au total 100 % en poids et b) et c) étant utilisés au total en une quantité de 30 à 90

% en poids, par rapport à la somme des composants a) à e),
et la composition d'adhésif pouvant contenir encore 0,1 à 6 % en poids, de préférence 0,1 à 5 % en poids et de façon particulièrement préférée 0,2 à 4 % en poids, par rapport au poids total de la composition d'adhésif, d'autres additifs - différent des composants a) à e).

**2.** Composition d'adhésif selon la revendication 1,
**caractérisée en ce**
**qu'**elle contient au moins 10 % en poids, par rapport à la somme des composants a) à e), de constituants polymères, de préférence en ce qu'elle contient 10 à 70 % en poids, de façon particulièrement préférée 20 à 60 % en poids, chaque fois par rapport à la somme des composants a) à e), de constituants polymères et de façon correspondante 90 à 30 % en poids, de façon particulièrement préférée 80 à 20 % en poids, chaque fois par rapport à la somme des composants a) à e), de constituants monomères.

**3.** Composition d'adhésif selon la revendication 1 ou 2,
**caractérisée en ce que**
les composants a), b) et d) se trouvent au moins en partie sous forme de copolymère de a) et d) et/ou b) et d).

**4.** Composition d'adhésif selon l'une quelconque des revendications 1 à 3,
**caractérisée en ce que**
sont contenus en tant qu'amorceurs de polymérisation

- au moins un amorceur thermique, de préférence choisi dans le groupe constitué par le peroxynéodécanoate de tert.-amyle, le peroxypivalate de tert.-amyle, le peroxypivalate de tert.-butyle, le peroxy-2-éthylhexanoate de tert.-amyle, le peroxy-2-éthylhexanoate de tert.-butyle, le peroxy-3,5,5,-triméthylhexanoate de tert.-amyle, le 3,3-di-(tert.-amylperoxy)-butyrate d'éthyle, le perbenzoate de tert.-butyle, l'hydroperoxyde de tert.-butyle, le peroxyde de décanoyle, le peroxyde de lauryle, le peroxyde de dibenzoyle, le peroxydicarbonate de bis(4-tert.-butylcyclohexyle), le peroxynéodécanoate de tert.-butyle, le peroxy-3,5,5,-triméthylhexanoate de tert.-butyle,
et/ou
- au moins un photoamorceur, de préférence choisi dans le groupe constitué par la benzophénone, l'α,α-diéthoxyacétophénone, la 4,4-diéthylamino-benzophénone, la 2,2-diméthoxy-2-phénylacéto-phénone, la 4-isopropylphényl-2-hydroxy-2-propyl-cétone, la 1-hydroxycyclohexylphénylcétone, le p-diméthylaminobenzoate d'isoamyle, le 4-diméthylaminobenzoate de méthyle, l'o-benzoyl-benzoate de méthyle, la benzoïne, l'éther éthylique de benzoïne, l'éther isopropylique de benzoïne, l'éther isobutylique de benzoïne, la 2-hydroxy-2-méthyl-1-phénylpropan-1-one, la 2-isopropylthioxanthone, la dibenzosubérone, l'oxyde de 2,4,6-triméthylbenzoyldiphényl-phosphine, le 2,4,6-triméthylbenzoylphényl-phosphinate d'éthyle, un oxyde de bisacylphosphine.

**5.** Composition d'adhésif selon l'une quelconque des revendications 1 à 4,
**caractérisée en ce**
**qu'**elle comprend ou ne comprend pas les composants a) à e) en les quantités indiquées ci-après

a) 20 à 50 % en poids, de préférence 20 à 40 % en poids de poly(méthacrylate d'isobutyle) ou de méthacrylate d'isobutyle ou d'un mélange de ceux-ci
b) 44 à 79 % en poids d'acrylate de butyle
c) 0 % en poids de poly(acrylate de butyle), c'est-à-dire qu'aucun poly(acrylate de butyle) n'est contenu
d) 0,5 à 3 % en poids, de préférence 1 à 2 % en poids, d'un (méth)acrylate ou (méth)acrylate à fonction époxy, de préférence de méthacrylate de glycidyle
e) 0,5 à 3 % en poids, de préférence 1 à 2 % en poids de trialcoxysilanes vinyliques ou substitués par (méth)acryloyle, de préférence de gamma-méthacryloyloxypropyltriméthoxysilane

ou
en ce qu'elle comprend les composants a) à e) en les quantités indiquées ci-après

a) 20 à 50 % en poids, de préférence 20 à 40 % en poids de poly(méthacrylate d'isobutyle) ou de méthacrylate d'isobutyle ou d'un mélange de ceux-ci
b) 24 à 79 % en poids d'acrylate de butyle
c) 5 à 50 % en poids, de préférence 5 à 30 % en poids, de poly(acrylate de butyle)
d) 0,5 à 3 % en poids, de préférence 1 à 2 % en poids, d'un (méth)acrylate ou (méth)acrylate à fonction époxy,

de préférence de méthacrylate de glycidyle
e) 0,5 à 3 % en poids, de préférence 1 à 2 % en poids de trialcoxysilanes vinyliques ou substitués par (méth)acryloyle, de préférence de gamma-méthacryloyloxypropyltriméthoxysilane

ou
en ce qu'elle comprend les composants a) et b) en les quantités indiquées ci-après, mais les composants c), d) et e) ne sont pas contenus

a) 20 à 50 % en poids, de préférence 20 à 40 % en poids de poly(méthacrylate d'isobutyle) ou de méthacrylate d'isobutyle ou d'un mélange de ceux-ci
b) 50 à 80 % en poids d'acrylate de butyle

ou
en ce qu'elle comprend les composants a) à c) en les quantités indiquées ci-après, mais les composants d) et e) ne sont pas contenus

a) 20 à 50 % en poids, de préférence 20 à 40 % en poids de poly(méthacrylate d'isobutyle) ou de méthacrylate d'isobutyle ou d'un mélange de ceux-ci
b) 30 à 75 % en poids d'acrylate de butyle
c) 5 à 50 % en poids, de préférence 5 à 30 % en poids de poly(acrylate de butyle)

dans les autres modes de réalisation possibles revendiqués précédemment la somme des composants contenus des composants a) à e) étant égale à 100 % en poids.

**6.** Procédé pour la fabrication de corps composites, de préférence de verres composites verre/matière plastique,
**caractérisé en ce**
**qu'**on fait fondre la composition d'adhésif selon l'une quelconque des revendications 1 à 4 et on assemble entre eux par collage à chaud les corps à coller.

**7.** Procédé pour la fabrication de corps composites,
**caractérisé en ce**
**qu'**entre un 1^er^ corps, de préférence en verre, de façon particulièrement préférée une plaque de verre, et un 2^e^ corps, de préférence en matière plastique, de façon particulièrement préférée une plaque de matière plastique, est formé un espace vide, cet espace vide, de préférence à un écartement de la plaque de verre d'avec la plaque de matière plastique de 0,01 à 5 mm, de préférence de 0,1 à 3 mm et de façon particulièrement préférée de 0,1 à 2 mm, soit est rempli avec une composition d'adhésif selon l'une quelconque des revendications 1 à 5 sous forme fondue et une couche de colle est alors produite soit est rempli avec une composition d'adhésif selon l'une quelconque des revendications 1 à 5 sous forme d'une composition polymérisable et la composition polymérisable est ensuite polymérisée.

**8.** Procédé selon la revendication 7,
**caractérisé en ce que**
d'abord on effectue un durcissement thermique de la composition polymérisable de préférence à une température de 70 à 110 °C pendant 30 à 90 min et ensuite un durcissement au moyen d'un rayonnement UV, de préférence à une température de 20 à 80 °C.

**9.** Procédé pour la fabrication de corps composites,
**caractérisé en ce**
**qu'**on produit à partir d'une composition d'adhésif selon l'une quelconque des revendications 1 à 5 un film de polymère, de préférence ayant une épaisseur de 0,01 à 5 mm, de préférence de 0,1 à 3 mm, et de façon particulièrement préférée de 0,1 à 2 mm, on le place entre un 1^er^ corps, de préférence un corps en verre, de façon particulièrement préférée une plaque de verre, et un 2^e^ corps, de préférence un corps en matière plastique, de façon particulièrement préférée une plaque de matière plastique, et ensuite on stratifie sous l'effet de la pression et de la température.

**10.** Procédé selon la revendication 9,
**caractérisé en ce que**
pendant la stratification la température se situe dans la plage de 60 à 120 °C et/ou la pression se situe dans la plage

de 10 à 150 kN et/ou le temps de pressage va de 1 à 100 minutes.

**11.** Procédé selon la revendication 9 ou 10,
**caractérisé en ce que**
pour la production du film de polymère on utilise la composition d'adhésif sous forme d'une composition polymérisable et on effectue d'abord un durcissement thermique de la composition polymérisable, de préférence à une température de 60 à 110 °C pendant 30 à 90 min et ensuite un durcissement au moyen d'un rayonnement UV, de préférence à une température de 20 à 80 °C.

**12.** Film de polymère, de préférence ayant une épaisseur de 0,01 mm à 5 mm, de façon particulièrement préférée de 0,1 à 3 mm, de façon tout particulièrement préférée de 0,1 à 2 mm, pouvant être obtenu à partir d'une composition d'adhésif selon l'une quelconque des revendications 1 à 5, de préférence par le fait que la composition d'adhésif se trouve sous forme d'une composition polymérisable et est durcie par polymérisation.

**13.** Corps composite, comprenant au moins une couche de colle à base d'une composition d'adhésif selon l'une quelconque des revendications 1 à 5 ou un film de colle selon la revendication 12.

**14.** Corps composite selon la revendication 13,
**caractérisé en ce qu'**il comprend

- au moins un corps en matière plastique, de préférence une plaque de matière plastique, de façon particulièrement préférée ayant une épaisseur de 0,5 à 8 mm, et de façon tout particulièrement préférée constitué d'un homopolymère ou copolymère ou d'un mélange de polymères de poly(méth)acrylates
- au moins deux autres corps, de préférence au moins deux plaques de verre, de préférence ayant une épaisseur de 0,01 à 2 mm, et de façon tout particulièrement préférée constitués de verre sodocalcique ou de verre blanc à faible teneur en fer ou de verre trempé chimiquement,
- respectivement entre le corps en matière plastique et les plaques de verre, une couche de colle provenant d'une composition d'adhésif selon l'une quelconque des revendications 1 à 5 ou un film de colle selon la revendication 12.

**15.** Corps composite selon la revendication 13,
**caractérisé en ce qu'**il comprend
une plaque de verre de plus grande épaisseur par rapport au film de polymère également utilisé, de préférence de 2 à 8 mm, de façon particulièrement préférée de 3 à 6 mm, en tant que support, et un film de polymère, de préférence texturé, fixé au moyen de colle selon l'invention, de façon particulièrement préférée un film à textures de Fresnel.

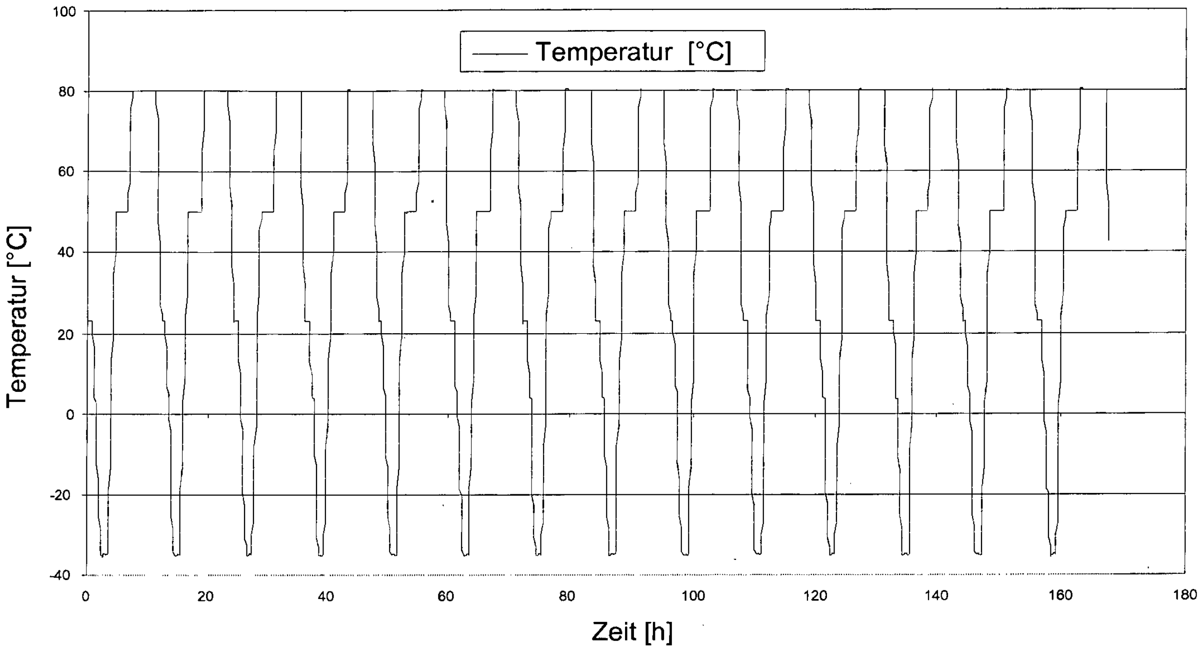


Abbildung 1: Temperaturprofil des Klimawechseltests

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- FR 2856951 A1
- EP 617078 B1
- WO 2007080186 A1
- WO 2001051279 A2
- FR 2925483 A1
- DE 10118617 A1
- DE 2929491 A1
- WO 2005058596 A1
- WO 2005005123 A1
- AU 2005200410 A1
- WO 2011080464 A1
- FR 2948357 A1
- US 20050202198 A1
- US 5506051 A
- WO 9962707 A1
- DE 202010008723 U1
- DE 102009025972 A1
- US 20100108143 A1
- US 20100108127 A1
- DE 19526912 A1
- EP 2199075 A1
- EP 259529 B1
- WO 2010063729 A1
- US 20040022970 A1
- US 3867222 A
- WO 2004089617 A1
- WO 2004089618 A1
- WO 2004089619 A1
- WO 2004011755 A1
- US 20060201078 A1
- DE 10045006 C1
- WO 2010010156 A1
- DE 660634 C
- DE 2524729 A1
- WO 03078485 A1

### In der Beschreibung aufgeführte Nicht-Patentliteratur

- **H. G. ELIAS.** Makromoleküle. 1990, vol. 1 und 2
- Polymerization Processe. Ullmann's Encyclopedia of Industrial Chemistry
- CD Römpp Chemie Lexikon. Georg Thieme Verlag, 1995